(19) Europäisches Patentamt
European Patent Office
Office européen des brevets

(11) EP 0 944 656 B1

(12) # EUROPÄISCHE PATENTSCHRIFT

(45) Veröffentlichungstag und Bekanntmachung des Hinweises auf die Patenterteilung:
**11.07.2001 Patentblatt 2001/28**

(21) Anmeldenummer: **97952822.1**

(22) Anmeldetag: **28.11.1997**

(51) Int Cl.[7]: **C08F 265/04**, C08L 51/00

(86) Internationale Anmeldenummer:
**PCT/EP97/06650**

(87) Internationale Veröffentlichungsnummer:
**WO 98/25980 (18.06.1998 Gazette 1998/24)**

(54) **VERFAHREN ZUR HERSTELLUNG KAUTSCHUKMODIFIZIERTER FORMMASSEN**
PROCESS FOR PREPARING RUBBER-MODIFIED MOULDING COMPOUNDS
PROCEDE DE PRODUCTION DE MATIERES DE MOULAGE MODIFIEES AU CAOUTCHOUC

(84) Benannte Vertragsstaaten:
**BE DE ES FR GB NL**

(30) Priorität: **10.12.1996 DE 19651300**

(43) Veröffentlichungstag der Anmeldung:
**29.09.1999 Patentblatt 1999/39**

(73) Patentinhaber: **BASF AKTIENGESELLSCHAFT
67056 Ludwigshafen (DE)**

(72) Erfinder:
- **MC KEE, Graham, Edmund
D-67433 Neustadt (DE)**
- **JÜNGLING, Stephan
D-68165 Mannheim (DE)**
- **WARZELHAN, Volker
D-67273 Weisenheim (DE)**
- **GAUSEPOHL, Hermann
D-67112 Mutterstadt (DE)**

(56) Entgegenhaltungen:
**WO-A-96/15167** **WO-A-96/28487**
**DE-A- 2 632 235**

- **SEGALL I ET AL: "CORE-SHELL STRUCTURED LATEX PARTICLES.I. COPOLYMERIZATION OF STYRENE/BENZYL METHACRYLATE AS A CHOICE FOR SHELL MATERIAL AND CCHARACTERIZATION OF POLY(N-BUTYL ACRYLATE) CORE LATEX PARTICLES" JOURNAL OF APPLIED POLYMER SCIENCE, Bd. 58, Nr. 2, 10.Oktober 1995, Seiten 385-399, XP000538685**
- **HISASHI KOHKAME ET AL: "DEVELOPMENT OF AAS RESIN BY THE EMULSION-SUSPENSION POLYMERIZATION METHOD" JOURNAL OF APPLIED POLYMER SCIENCE, Bd. 46, Nr. 10, 5.Dezember 1992, Seiten 1775-1784, XP000335467**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von kautschukmodifizierten Formmassen. Des weiteren betrifft die Erfindung die nach dem erfindungsgemäßen Verfahren erhältlichen kautschukmodifizierten Formmassen sowie deren Verwendung für die Herstellung von Fasern, Folien und Formkörpern. Außerdem betrifft die Erfindung Polymerblends, enthaltend die genannten kautschukmodifizierten Formmassen.

Verfahren zur Herstellung kautschukmodifizierter Formmassen sind hinlänglich bekannt. Beispielsweise werden in der DE-OS 24 27 960 Formmassen aus ABS (Polybutadienkautschuk-Partikel, gepfropft mit Polystyrolacrylnitril in Polystyrolacrylnitril-Matrix) sowie ein Verfahren zu deren Herstellung beschrieben.

Bei der Herstellung von Acrylnitril-Styrol-Acrylat-(ASA)-Formmassen wird in der Regel ein Acrylat-Kautschuk vorgelegt, auf den anschließend durch Polymerisation mit einem Monomerengemisch aus Styrol und Acrylnitril Copolymere auf der Basis dieser Monomeren aufgepfropft werden. Die Herstellung von ASA-Formmassen kann zum Beispiel in Emulsion oder in Lösung erfolgen.

Die Herstellung von ASA-Formmassen in Emulsion ist zum Beispiel beschrieben in DE 32 06 136, 31 49 046, 31 49 358, 32 27 555, 31 29 378, 31 29 472, 29 40 804, 28 26 925 und 19 11 882. Dabei wird der Kautschuk aus n-Butylacrylat und geringen Mengen an zwei Doppelbindungen enthaltenden Monomeren in Emulsion hergestellt. Nachteile dieses Verfahrens sind, daß größere Mengen Wasser durch die Emulsionspolymerisation sowie durch die Fällung der Polymerdispersion anfallen, die abgetrennt und als behandlungsbedürftiges Abwasser entsorgt werden müssen. Weiterhin weisen die nach dem Verfahren hergestellten Formmassen eine nicht für alle Anwendungen ausreichende Schlagzähigkeit und Reißfestigkeit auf. Zudem ist der Glanz der aus diesen Formmassen hergestellten Formkörper nicht über eine breite Skala variierbar.

EP 0 095 919 und DE 11 82 811 beschreiben ein Verfahren zur Herstellung von ASA-Formmassen in Lösung.

Nach EP 0 095 919 findet keine Pfropfung der Comonomeren auf den Kautschuk, d.h. keine wirksame Kopplung an der Grenzfläche, statt. Gemäß DE 11 82 811 wird der Kautschuk aus n-Butylacrylat mit 0,5 bis 10 Gew.-% eines Comonomeren mit zwei radikalisch polymerisierbaren Doppelbindungen hergestellt. Die Polymerisation des Styrol-Acrylnitril (SAN)-Monomerengemisches wird bei einem Kautschukumsatz von 10 bis 80 % gestartet. Dies hat zur Folge, daß der gepfropfte Anteil des Kautschuks nicht die gleiche Zusammensetzung wie die Polymermatrix besitzt, was zu schlechteren mechanischen Eigenschaften der Formmassen führt. Weiterhin führt die Einpolymerisation von Kautschukeinheiten in die Pfropfhülle, d. h. die Pfropfäste, zu einer schlechteren Wärmeformbeständigkeit der Produkte.

In der Patentanmeldung WO-A-9 615 167 werden kautschukmodifizierte ASA-Formmassen mit verbesserter Schlagzähigkeit, Reißfestigkeit und Reißdehnung dadurch erhalten, daß ein Monomer mit zwei oder mehr Doppelbindungen beim radikalischen Aufbau des Pfropfkerns mitverwendet wird, wodurch Pfropfstellen für die wachsenden Ketten der Hülle und der Matrix geschaffen werden und der niedermolekulare Anteil des Kautschuks reduziert wird.

Von Nachteil bei den bekannten radikalischen Verfahren beim Aufbau von Polymerisaten oder Copolymerisaten ist, daß regelmäßig zumindest bestimmte Verfahrensschritte in wässrigen Systemen durchgeführt werden müssen, was insbesondere bei einer großtechnischen Anwendung eine aufwendige und kostenintensive Aufbereitung des kontaminierten Wassers mit sich bringt. Gleichfalls nachteilig ist es, wenn während des Verfahrensverlaufs das Reaktionsmedium in aufwendiger Weise gewechselt werden muß, wie bei der Herstellung gemäß der genannten Anmeldung WO-A- 9 615 167, wo in der ersten Verfahrensstufe n-Butylacrylat radikalisch in Cyclohexan polymerisiert wird und anschließend nach Entfernen des Lösungsmittels die Polymerisation in einem wässrigen Medium fortgeführt wird, um zur gewünschten kautschukmodifizierten Formmasse zu gelangen.

Nach den bekannten radikalischen Methoden ist es zudem unter den üblichen Verfahrensbedingungen nicht oder nur sehr eingeschränkt möglich, in Gegenwart von Monomeren, die ein tertiäres Wasserstoffatom tragen, Kautschukpartikel mit hohem Molekulargewicht zu erhalten. Wird zur Verhinderung der Kettenübertragungsreaktion bei tiefen Temperaturen gearbeitet, resultieren unter wirtschaftlichen Gesichtspunkten nicht mehr vertretbare lange Reaktionszeiten.

Außerdem bedürfen die herkömmlichen radikalischen Emulsionsverfahren zumeist des Zusatzes von Emulgatoren, wie Alkalimetallsalze von Alkyl- oder Alkylarylsulfonsäuren oder Sulfosuccinaten, um eine stabile Emulsion zu gewährleisten. Ebenso wie die Emulgatoren lassen sich häufig auch die für die Isolierung des kautschukmodifizierten Polymerisats erforderlichen Fällungsreagenzien, wie Calciumchlorid oder Magnesiumsulfat, nicht mehr vollständig aus der thermoplastischen Formmasse entfernen. Dieses kann zum einen zu einer Verschlechterung der rheologischen und mechanischen Eigenschaften führen und zum anderen über das Phänomen des Ausschwitzens sowie der Bildung von Stippen die Oberflächenbeschaffenheit der erhaltenen Fasern, Folien und Formkörper sowie deren Einfärbbarkeit nachhaltig beeinträchtigen.

Es wäre daher wünschenswert, kautschukmodifizierte Formmassen herstellen zu können, ohne auf einen Lösungsmittelwechsel oder gar ohne auf ein herkömmliches Lösungsmittel angewiesen zu sein.

Der vorliegenden Erfindung lag demzufolge die Aufgabe zugrunde, ein Verfahren zur Herstellung von kautschukmodifizierten Formmassen zur Verfügung zu stellen, das vollständig, nahezu vollständig oder in mindestens einem wesentlichen Schritt ohne Wasser und/oder wahlweise auch ohne größere Anteile herkömmlicher Lösungsmittel auskommt und das darüber hinaus die Bildung hochmolekularer Kautschukpartikel auch in Gegenwart von Monomerkomponenten, die ein tertiäres Wasserstoffatom tragen, gestattet.

Demgemäß wurde ein Verfahren zur Herstellung kautschukmodifizierter Formmassen gefunden, bei dem man in einem ersten Schritt $a_1$) ein Gemisch (A), enthaltend Acrylat- oder Methacrylatderivate oder Acrylat- und Methacrylatderivate und ein Lösungsmittel, enthaltend olefinisch ungesättigte Verbindungen, die kein Acrylat- oder Methacrylatderivat sind, anionisch zu einem (Co)polymer, enthaltend Acrylatmonomere, deren Homopolymerisate eine Glasübergangstemperatur kleiner 0°C aufweisen, polymerisiert oder bei dem man in einem Schritt $a_2$) Acrylat- oder Methacrylatderivate oder Acrylat- und Methacrylatderivate in Gegenwart eines Lösungsmittels, das olefinisch ungesättigte Verbindungen enthält, sequentiell anionisch zu Blockcopolymeren mit mindestens einem Block'aus Monomeren, deren Homopolymere eine Glasübergangstemperatur kleiner 0°C aufweisen, polymerisiert und bei dem in einem weiteren Schritt b) das gemäß dem ersten Verfahrensschritt $a_1$) oder $a_2$) oder gemäß den Verfahrensschritten $a_1$) und $a_2$) erhaltene Reaktionsgemisch, ggf. nach Zugabe weiterer ungesättigter Verbindungen, einer radikalisch initiierten Polymerisation unterworfen wird.

Des Weiteren wurden kautschukmodifizierte Formmassen gefunden, erhältlich gemäß dem erfindungsgemäßen Verfahren sowie die Verwendung der Formmassen für die Herstellung von Fasern, Folien und Formkörpern. Außerdem wurden Polymerblends, enthaltend die genannten kautschukmodifizierten Formmassen, gefunden.

Als Acrylat- oder Methacrylatderivate werden bevorzugt die nachfolgenden Monomerbausteine eingesetzt:

i) Verbindungen der allgemeinen Formel (I)

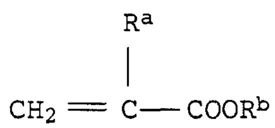

(I),

in der

$R^a$ Wasserstoff oder Methyl,

$R^b$ eine $C_1$- bis $C_{20}$- n-Alkylgruppe, i-Propyl, i-Butyl, i-Pentyl oder t-Butyl bedeuten,

ii) Verbindungen der allgemeinen Formel (II)

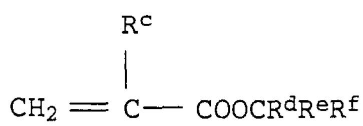

(II),

in der

$R^c$ Wasserstoff oder Methyl

$CR^dR^eR^f$ 2-Methylpropyl, 2-Methylbutyl, 2-Methylhexyl, 2-Methyloctyl, 2-Ethylbutyl, 2-Ethylpentyl, 2-Ethylhexyl, 2-Ethyloctyl, 2-Phenylethyl, 2-Phenylpropyl, 2-Phenylbutyl, 2-Phenylpentyl, 2-Phenylhexyl, 2-Phenyloctyl, 3-Methylpropyl, 3-Methylbutyl, 3-Methylpentyl, 3-Methylhexyl, 3-Methyloctyl, 3-Ethylpentyl, 3-Ethylhexyl oder 3-Ethyloctyl bedeuten,

iii) Acrylat- oder Methacrylatverbindungen mit einer oder mehreren Doppelbindungen in der Estereinheit,

iv) Di- oder Poly(meth)acrylsäureester von di- oder polyfunktionellen Alkoholen,

v) Acrylamide oder Methacrylamide, Stickstoff-funktionelle Acrylate und Methacrylate, aromatische und araliphatische Ester der Acryl- oder Methacrylsäure, mit funktionellen Gruppen auf der Basis der Elemente der Gruppen

IVA, VA, VIA, VIIA des Periodensystems der Elemente substituierte Acrylate und Methacrylate.

Diese Verbindungen können einzeln oder in einem beliebigen Gemisch eingesetzt werden.

Besonders geeignet als Verbindungen i) sind solche Verbindungen, in denen der Rest $R^b$ in (I) Methyl, Ethyl, n-Propyl, iso-Propyl, n-Butyl, i-Butyl, t-Butyl, n-Pentyl, i-Pentyl, n-Hexyl, n-Heptyl, n-Octyl, n-Nonyl, n-Decyl, n-Dodecyl, n-Tetradecyl, n-Hexadecyl, n-Octadecyl, n-Eicosyl ist.

Als Monomere ii) werden Verbindungen (II) eingesetzt, in denen der Rest $-C(R^d)(R^e)(R^f)$ 2-Methylpropyl, 2-Methylbutyl, 2-Methylhexyl, 2-Methyloctyl, 2-Ethylbutyl, 2-Ethylpentyl, 2-Ethylhexyl, 2-Ethyloctyl, 2-Phenylethyl, 2-Phenylpropyl, 2-Phenylbutyl, 2-Phenylpentyl, 2-Phenylhexyl, 2-Phenyloctyl, 3-Methylbutyl, 3-Methylpentyl, 3-Methylhexyl, 3-Methyloctyl, 3-Ethylpentyl, 3-Ethylhexyl, 3-Ethyloctyl, insbesondere 2-Ethylhexyl bedeutet.

Als Monomere iii) eignen sich insbesondere Allylacrylat, Allylmethacrylat, 2-Allyloxyethylacrylat, 2-Allyloxyethylmethacrylat, Dihydrodicyclopentadienylacrylat, Dihydrodicyclopentadienylmethacrylat, (4-Vinylbenzyl)acrylat, (4-Vinylbenzyl)methacrylat, (3-Vinylbenzyl)acrylat sowie (3-Vinylbenzyl)methacrylat.

Als Monomere iv) sind Butandioldiacrylat, -methacrylat, Ethandioldiacrylat, -methacrylat, Glyceroltriacrylat, -methacrylat bevorzugt.

Zu den bevorzugten Verbindungen v) zählen z.B. N,N-Dimethylacrylamid, N,N-Diethylacrylamid, N,N-Dimethylmethacrylamid, N,N-Diethylmethacrylamid, N,N-Di-i-propylacrylamid, N,N-Di-n-butylacrylamid, N,N-Di-i-propylmethacrylamid, N,N-Di-n-butylmethacrylamid, Glycidylacrylat, Glycidylmethacrylat.

Die Monomertypen i) bis v) können jeweils für sich, als individuelle Verbindung oder als Gemisch von unter einen Monomertyp fallenden Verbindungen oder in einer beliebigen Mischung nach dem erfindungsgemäßen Verfahren eingesetzt werden. Sie können auch sequentiell zur Polymerisation gebracht werden, um Blockcopolymere zu erhalten.

Als Lösungsmittel für das erfindungsgemäße Verfahren kommen olefinisch ungesättigte Verbindungen in Betracht, die kein Acrylat- oder ein Methacrylatderivat sind. Diese Verbindungen können sowohl das ausschließliche Lösungsmittel bilden, in dem die anionische Polymerisation stattfindet, als auch Lösungsmittelbestandteil neben einer weiteren Lösungsmittelkomponente sein. In einer bevorzugten Ausführungsform werden als Lösungsmittel oder Lösungsmittelkomponente vinylaromatische Verbindungen eingesetzt. In einer weiteren Ausführungsform enthält das Lösungsmittel keine olefinisch ungesättigten Verbindungen.

Grundsätzlich kommen olefinisch ungesättigte Verbindungen in Frage, die beispielsweise unter die allgemeine Formel (III) fallen:

$$(R^1)(R^2)C = C'(R^3)(R^4) \qquad \text{(III)},$$

in der die Substituenten die nachfolgende Bedeutung haben:

$R^1$, $R^2$ unabhängig voneinander Wasserstoff, $C_1$- bis $C_{14}$-Alkyl in geradkettiger und verzweigter Form, auch substituiert, wie Methyl, Ethyl, i-Propyl, n-Propyl, i-Butyl, n-Butyl, t-Butyl, $C_6$- bis $C_{14}$-Aryl, auch einfach oder mehrfach substituiert, wie Phenyl oder Tolyl, $C_3$- bis $C_7$-Cycloalkyl, auch substituiert, wie Cyclopropyl, Cyclopentyl oder Cyclohexyl, $C_2$- bis $C_{10}$-Alkenyl, wie Vinyl, Allyl, Butenyl oder Butadienyl, und

$R^3$, $R^4$ unabhängig voneinander Wasserstoff, $C_1$- bis $C_{14}$-Alkyl in geradkettiger und verzweigter Form, auch substituiert, wie Methyl, Ethyl, i-Propyl, n-Propyl, i-Butyl, n-Butyl, t-Butyl, $C_6$- bis $C_{14}$-Aryl, auch einfach oder mehrfach substituiert, wie Phenyl oder Tolyl, $C_3$- bis $C_7$-Cycloalkyl, auch substituiert, wie Cyclopropyl, Cyclopentyl oder Cyclohexyl, $C_2$- bis $C_{10}$-Alkenyl, wie Vinyl, Allyl, Butenyl oder Butadienyl, oder gemeinsam mit Cyclopropyl, Cyclopentyl, Cyclohexyl, auch einfach- oder mehrfach substituiert.

Als olefinisch ungesättigte Verbindungen sind beispielsweise geeignet Ethylen, Propylen, 1-Buten, 2-Buten, Butadien, 1,4-Hexadien, 1,5-Hexadien oder 1-Octen. Ebenfalls können die Reste $R^1$ und $R^2$ bzw. $R^3$ und $R^4$ oder $R^1$ und $R^3$ bzw. $R^2$ und $R^4$ einen ungesättigten Carbo- oder Heterocyclus bilden, wie Cyclopenten oder Cyclohexen.

Als Lösungsmittel oder Lösungsmittelkomponenten für das erfindungsgemäße Verfahren sind z.B. vinylaromatische Verbindungen, wie Styrol, $\alpha$-Methylstyrol, o-, m-, p-Methylstyrol oder beliebige Gemische der genannten vinylaromatischen Verbindungen besonders geeignet. Bevorzugt werden als Lösungsmittel oder als Lösungsmittelkomponente Styrol, aber auch Ethen oder Butadien verwendet, besonders bevorzugt ist Styrol. Bilden vinylaromatische Verbindungen bzw. die ungesättigten Verbindungen nach Anspruch 1 eine Komponente eines Lösungsmittelsystems, dann liegt der Anteil dieser Komponente, bezogen auf die Gesamtlösungsmittelmenge, bevorzugt im Bereich von 5 bis 99 Vol-%.

Als weitere Lösungsmittelbestandteile können Dimethoxyethan, Diethylether, Tetrahydrofuran, Toluol, Ethylbenzol, Cyclohexan oder ein beliebiges Gemisch der genannten Lösungsmittel eingesetzt werden. Geeignete Lösungsmittelsysteme des erfindungsgemäßen Verfahrens sind z.B. Styrol/Tetrahydrofuran, Styrol/Toluol oder Styrol/Tetrahydrofuran/Ethylbenzol.

Grundsätzlich kommen jedoch alle inerten, aprotischen, polaren und unpolaren Lösungsmittel in Frage.

Die Acrylat- oder Methacrylatderivate oder beliebige Gemische derselben liefern in den beschriebenen Lösungsmitteln nach den gängigen Verfahren der anionischen Polymerisation Homo-, Co- und Blockcopolymerisate. Dabei kann auf für die anionische Polymerisation bekannte Initiatorsysteme zurückgegriffen werden, wie sie auch in J.M.S.-Rev. Macromol. Chem. Phys., 1994, C34, S. 234-324 beschrieben sind.

Als geeignet hat sich zum Beispiel ein Initiatorsystem, bestehend aus einer Metallalkyl-, bevorzugt Alkalimetallalkylverbindung, oder einer Mischung unterschiedlicher Metallalkylverbindungen als Starter, und einem Alkalialkoholat als chelatisierend wirkenden Additiv erwiesen. Eine derartige Initiatorzusammensetzung findet sich in der EP-A 0 524 054 mit bevorzugter Nennung von Diphenylmethyllithium als Starter und dem Lithiumsalz von $CH_3(OCH_2CH_2)_2OH$ als Additiv und ebenfalls in der EP 0 668 297, in der neben dem bereits genannten Initiatorsystem bimetallische Alkoxyalkoxide hervorgehoben werden.

Als chelatisierende Additive kommen beispielsweise in Betracht $CH_3(OCH_2CH_2)OLi$, $CH_3(OCH_2CH_2)_2OLi$, $CH_3(OCH_2CH_2)_3OLi$,
n-$Bu(OCH_2CH_2)_2OLi$, $Et(OCH_2CH_2)_2OLi$ oder Mischungen der genannten Additive. Des weiteren eignen sich als ungeladene, chelatisierend wirkende Additive makrocyclische Polyether und Kryptanden, z.B. Benzo-15-Krone-5, Benzo-18-Krone-6, 1,4,7,10-Tetraoxacyclododecan, 1,4,7,10,13-Pentaoxacyclooctadecan, 2,3,11,12-Dibenzo-1,4,7,10,13,16-Hexaoxacyclooctadecan-2,11-dien, 1,10-Diaza-4,7,13,16,21,24-hexaoxabicyclo[8.8.8]hexacosan oder 5,6-Benzo-4,7,13,16,21,24-hexaoxa-1,10-diazabicyclo[8.8.8]hexacosan.

Ein weiteres, ebenfalls bevorzugtes anionisches Initiatorsystem für das erfindungsgemäße Verfahren geht zurück auf

($A_1$) Metallalkoholate der allgemeinen Formeln ($\alpha$) oder ($\beta$) als chelatisierende Additive

$$R^{1'}R^{2'}N\text{-}R^{3'}\text{-}OM \qquad (\alpha),$$

$$R^{4'}N(R^{5'}\text{-}OZ^1)(R^{6'}\text{-}OZ^2) \qquad (\beta),$$

worin

$R^{1'}$ und $R^{2'}$, jeweils unabhängig voneinander, sowie $R^{4'}$ als Alkylgruppe Methyl, Ethyl, i- oder n-Propyl oder i-, n- oder t-Butyl; als Cycloalkylgruppe Cyclopropyl, -pentyl oder -hexyl; als Alkylarylgruppe Benzyl; als aromatische Gruppe Phenyl, als heteroaromatische Gruppe Pyridyl bedeuten können,

$R^{3'}$ eine Methylen-, Ethylen-, n-, i-Propylen-, Ethoxyethyl- oder Phenyleneinheit bedeutet,

$R^{5'}$ und $R^{6'}$, unabhängig voneinander, als Arylgruppe Phenyl; als Alkylarylgruppe Benzyl; als Alkylgruppe Methyl, Ethyl, i- oder n-Propyl oder i-, n- oder t-Butyl darstellen und

M, $Z^1$ und $Z^2$, unabhängig voneinander, Metallkationen, ausgewählt aus der Gruppe der Alkalimetalle bedeuten, insbesondere Lithium, sowie

($B_1$) auf Erdalkali- oder Alkalimetallalkylverbindungen als Starter.

Beispiele für unter die allgemeinen Formeln ($\alpha$) und ($\beta$) fallende Alkalimetallalkoholate sind die Lithiumsalze von 2-Dimethylaminoethanol, 2-Diethylaminoethanol, 2-Diisopropylaminoethanol, 1-(Dimethylamino)-2-propanol, 2-Dibutylaminoethanol, 2,2'-(n-Butylimino)bisethanol, 1,1'-(Methylimino)bis-2-propanol, 2-[2-(Dimethylamino)ethoxy]ethanol, 2-Diphenylaminoethanol, 2-(Ethylphenylamino)ethanol, 2-[Ethyl-(3-methylphenyl)amino]-ethanol, 3-(Ethylamino)-4-methylphenol, 3-Diethylaminophenol, 2,2'-(Phenylimino)bisethanol und 2,2'-[(3-Methylphenyl)imino]bisethanol. Bevorzugt wird auf die Lithiumsalze von 2-Dimethylaminoethanol, 2-Diethylaminoethanol, 2-Diisopropylaminoethanol, 2-Diethylaminoethanol, 2-Diisopropylaminoethanol, 1,1'-(Methylimino)bis-2-propanol und 2-[2-(Dimethylamino)ethoxy]ethanol zurückgegriffen. Besonders bevorzugt sind die Lithiumsalze von 2-Dimethylaminoethanol und 1,1'-(Methylimino)bis-2-propanol. Die Alkalimetallalkoholate können nach gängigen Verfahren durch Basenbehandlung aus den entsprechenden Aminoalkoholen erhalten werden. So wird beispielsweise 2-Dimethylaminolithiumethoxid durch Deprotonierung von 2-Dimethylaminoethanol bei 0°C mittels s-Butyllithium dargestellt.

Als anionische Starterverbindungen können für das erfindungsgemäße Verfahren im allgemeinen Alkyl- oder Alkylarylalkaliverbindungen verwendet werden, wobei der Alkylrest bevorzugt 1 bis 10, besonders bevorzugt 1 bis 6 C-Atome aufweist. Die Alkylarylverbindungen verfügen bevorzugt über eine $C_1$- bis $C_{10}$-Alkylgruppe und eine $C_6$- bis $C_{14}$-Arylgruppe, besonders bevorzugter Arylrest ist Phenyl oder substituiertes Phenyl. Alkylarylalkaliverbindungen sind z.B. von Styrol, $\alpha$-Methylstyrol oder 1,1-Diphenylethen abgeleitete Alkaliverbindungen, die durch Umsetzung mit beispielsweise n-Butyllithium, s-Butyllithium oder t-Butyllithium erhalten werden. Als häufig verwendete Alkylaryl- und Alkylalkaliverbindungen seien genannt: n-Butyllithium, s-Butyllithium, t-Butyllithium, Diphenylmethyllithium, -natrium, -kalium, 1-Phenylhexyllithium, 1,1-Diphenylhexyllithium.

Außerdem können als anionische Starterverbindungen Alkaliamide, Alkaliesterenolate oder Alkaliketoenolate eingesetzt werden. Unter diesen sind bevorzugt: Lithiumdiisopropylamid, Lithiumethylisobutyrat sowie das Lithiumenolat von Diisopropylketon.

Werden in dem ersten Schritt $a_1$) bzw. $a_2$) des erfindungsgemäßen Verfahrens Initiatorsysteme auf der Basis anionischer Starterverbindungen eingesetzt, dann verwendet man bevorzugt neben der vinylaromatischen Verbindung eine oder mehrere weitere Lösungsmittelkomponenten.

Bevorzugt werden als weitere Komponenten inerte unpolare und polare Lösungsmittel verwendet. Hierunter fallen aromatische Kohlenwasserstoffe, wie Toluol, Benzol, Xylol oder Ethylbenzol, und aliphatische Kohlenwasserstoffe, wie Cyclohexan, Hexan, Pentan oder Tetrahydrofuran. Es können auch Mischungen unpolarer Lösungsmittelkomponenten wie etwa Mischungen aus Toluol mit Ethylbenzol sowie Mischungen aus unpolaren und polaren Lösungsmitteln wie Mischungen aus Ethylbenzol und Tetrahydrofuran als Lösungsmittelkomponente verwendet werden.

In der Regel liegt z.B. der Styrolanteil an der Gesamtlösungsmittelmenge im Bereich von 10 bis 100 Vol-%, bevorzugt im Bereich von 20 bis 99 Vol.-%, besonders bevorzugt von 30 bis 95 Vol-%, wenn die anionische Polymerisation mit Erdalkali- oder Alkalialkylverbindungen gestartet wird.

Die neben der vinylaromatischen Verbindung verwendete Lösungsmittelkomponente besteht bevorzugt aus unpolaren Lösungsmitteln oder aus Lösungsmittelmischungen bestehend aus im wesentlichen unpolaren und daneben polaren Bestandteilen. Es kann z.B. als Lösungsmittelkomponente ein Gemisch aus Ethylbenzol und Tetrahydrofuran eingesetzt werden, das ein Mischungsverhältnis im Bereich von 55:45 bis 99:1, bevorzugt im Bereich von 80:20 bis 95:5 aufweist.

Die erfindungsgemäßen Verfahren in Gegenwart eines anionischen Initiators können sowohl im Batch- als auch im kontinuierlichen Verfahren eingesetzt werden. Grundsätzlich können die Komponenten der Initiatorzusammensetzung, das Lösungsmittel und die Monomeren in unterschiedlicher Reihenfolge miteinander vermischt werden. Beispielsweise können alle Starterkomponenten vorgelegt werden und Lösungsmittel und Monomerzugabe anschließend erfolgen. Des weiteren können die Komponenten des Initiatorsystems entweder in separaten Lösungen - gleichzeitig oder nacheinander, wobei die Metallorganylverbindung regelmäßig vorgelegt wird - oder als in einem inerten Lösungsmittel bzw. Lösungsmittelsystem hergestellte Mischung zur Monomerenlösung gegeben werden. Bevorzugt wird die Monomerenlösung zum Initiatorsystem gegeben. Bei dem Batch-Verfahren kann die Monomerenmenge auf einmal, stufenweise oder kontinuierlich zugegeben werden, wobei die Art des Gradienten beliebig ist.

Insbesondere bei der kontinuierlichen Verfahrensweise hat es sich als vorteilhaft erwiesen, Initiatorsystem- und Monomerlösung gleichzeitig oder nahezu gleichzeitig gegebenenfalls unter turbulenten Mischungsverhältnissen in das Reaktionsgefäß einzuführen. Dazu werden die Monomerlösung sowie die Initiatorlösung in einer Mischdüse mit geringem Volumen unter turbulenten Strömungsverhältnissen gemischt und anschließend durch ein Rohr mit engem Querschnitt, das mit statischen Mischern ausgerüstet sein kann (z.B. SMX-Mischer der Firma Sulzer), geleitet. Die Strömungsgeschwindigkeit sollte so hoch sein, daß eine relativ einheitliche Verweilzeit beobachtet wird. Die Zugabe eines Zweitmonomeren kann in einer weiteren, nachgeschalteten Mischdüse erfolgen.

Die Umsetzung kann beispielsweise bei einer Temperatur im Bereich von -78°C bis +80°C durchgeführt werden. Bevorzugt ist ein Temperaturbereich von -55°C bis +50°C. Die Reaktionstemperatur kann entweder konstant gehalten werden oder in kontrollierter Weise verändert, bevorzugt erhöht werden. Zur Erreichung hoher Molekulargewichte $M_n$ und enger Molekulargewichtsverteilungen ist es nicht abträglich, wenn sich das Reaktionsgemisch infolge der freiwerdenden Reaktionsenthalpie innerhalb kurzer Zeit erwärmt.

Nach erfolgtem Molekulargewichtsaufbau wird die Polymerisationsreaktion durch Zugabe einer protischen Substanz wie einem Alkohol (z.B. Methanol, Ethanol oder i-Propanol), einer Säure (z.B. Essigsäure, Ameisensäure oder Saizsäure), Wasser oder einer Mischung dieser Verbindungen abgebrochen.

Das Reaktionsgemisch kann in an sich bekannter Weise aufgearbeitet werden. Die erhaltenen Polymerisate können beispielsweise durch Zugabe einer geeigneten Menge eines niederen Alkohols oder Wasser ausgefällt werden. Wahlweise kann auch das Lösungsmittel bzw. Lösungsmittelsystem destillativ abgetrennt werden.

Die mittels eines anionischen Initiatorsystems nach dem erfindungsgemäßen Verfahren erhältlichen Polymerisate weisen im allgemeinen mittlere Molekulargewichte $\overline{M}_n$ im Bereich von 5000 bis 2000000 g/mol, bevorzugt im

Bereich von 5000 bis 500000 g/mol und besonders bevorzugt im Bereich von 5000 bis 250000 g/mol auf. Die Molekulargewichtsverteilung $\bar{M}_w/\bar{M}_n$ liegt in der Regel im Bereich von 1,05 bis 3,5, bevorzugt im Bereich von 1,05 bis 2,5.

Der Einbau von z.B. vinylaromatischen Verbindungen in die Polymerketten wird unabhängig von den Polymerisationsbedingungen oder der gewählten Menge an vinylaromatischer Verbindung während der anionischen Polymerisation nicht beobachtet. Es werden demnach selektiv im ersten Verfahrensschritt $a_1$) bzw. $a_2$) die Acrylat- bzw. Methacrylatderivate oder deren Mischungen polymerisiert.

Des Weiteren kann die anionische Polymerisation mit Hilfe von Metallocenkomplexen durchgeführt werden. Dabei werden bevorzugt Lanthanoid-Metallocenkomplexe (Lanthonocene), insbesondere Komplexe des Ytterbiums, Samariums oder Europiums eingesetzt, in denen das Metallzentrum in der Regel formal zweifach oder dreifach positiv geladen vorliegt. Ganz besonders geeignet sind z.B. die Komplexe des Samariums.

Mit Initiatorsystemen wie $[Cp^*_2SmH]_2$ ($Cp^*$ = Pentamethylcyclopentadienyl) sind z.B. auch mit problematischeren Acrylaten hohe Molekulargewichte bei sehr engen Molekulargewichtsverteilungen bei Polymerisationstemperaturen bis zu 100°C möglich. Exemplarisch seien als geeignete Initiatorkomplexe genannt $Cp^*_2Yb(THF)_2$ (JP-A 02 258 808), $Cp^*_2YbMe/AlMe_3$ (EP-A 442 476), $Cp^*_2SmMe(THF)$ (JP-A 06 093 049 und JP-A 06 093 060), $Cp^*_2Sm(THF)_2$ (JP-A 06 306 112).

Die Metallocenkomplexe können einen oder zwei Metallocenliganden aufweisen. Als Metallocenliganden sind beispielsweise $C_5$- bis $C_{50}$-Cyclopentadienylstruktureinheiten bevorzugt. Hierunter fällt der Cyclopentadienylrest $C_5H_5$ sowie alle einkernigen und mehrkernigen substituierten und unsubstituierten Molekülstrukturen mit insgesamt 5 bis 50 Kohlenstoffatomen, in welcher die Cyclopentadienylstruktureinheit formal enthalten ist. Es seien beispielhaft genannt ein- bis fünffach mit $C_1$- bis $C_{20}$-kohlenstofforganischen oder $C_1$- bis $C_{30}$-siliciumorganischen Resten substituierte Cyclopentadienylderivate. Diese Reste können sein $C_1$- bis $C_{10}$-Alkyl, $C_5$- bis $C_7$-Cycloalkyl, $C_6$-bis $C_{15}$-Aryl oder Aralkyl, wobei gegebenenfalls auch zwei benachbarte Reste gemeinsam für 4 bis 15 C-Atome aufweisende gesättigte oder ungesättigte cyclische Gruppen stehen können, oder $SiR_3$ mit R in der Bedeutung von $C_1$-bis $C_{10}$-Alkyl, $C_3$- bis $C_{10}$-Cycloalkyl oder $C_6$- bis $C_{15}$-Aryl. Hierzu zählen zum Beispiel Cyclopentadienyl, Pentamethylcyclopentadienyl, Methylcyclopentadienyl, Ethylcyclopentadienyl, 4-Butylcyclopentadienyl, Trimethylsilylcyclopentadienyl und (Ethyl) (tetramethyl) cyclopentadienyl.

Als mehrkernige Derivate mit einer Cyclopentadienylstruktureinheit seien Indenyl, Fluorenyl und Benzindenyl genannt. Grundsätzlich sind solche Cyclopentadienylstruktureinheiten bevorzugt, die einen sterisch anspruchsvollen Metallocenliganden bilden. Besonders bevorzugt ist Pentamethylcyclopentadienyl.

Für das erfindungsgemäße Verfahren werden z.B. Lanthanoid(II)-Metallocene mit zwei Metallocenliganden, besonders bevorzugt solche mit zwei Cyclopentadienyleinheiten komplexierte Lanthanoid(II)-Metallocene eingesetzt.

Die zwei freien Koordinationsstellen am Lanthanid(II)-Metallocen mit zweifachem Cyclopentadienylkomplexliganden werden z.B. durch schwach koordinierende Lewis-Basen wie Dimethoxyethan, Tetrahydrofuran, Diethylether oder Acetonitril abgesättigt. Bevorzugt werden Tetrahydrofuran oder Diethylether verwendet. Als geeignetes Lanthanoidmetall hat sich Samarium erwiesen, das in den bevorzugten Komplexen in der Regel formal zweifach oder dreifach positiv geladen vorliegt. Besonders bevorzugt als Metallocen-Initiator für die anionische Polymerisation von insbesondere Acrylaten und Methacrylaten ist beispielsweise Bis(pentamethylcyclopentadienyl)-samarium(II)- bis(tetrahydrofuran) ($(C_5Me_5)_2Sm(THF)_2$), dessen Herstellung und Charakterisierung z.B. zu finden ist in W.J. Evans, I. Bloom, W. E. Hunter, J.L. Atwood, J. Am. Chem. Soc. 1981, 193, S. 6507-6508.

Als formal dreifach positiv geladene Metallocenkomplexe eignen sich auch solche der allgemeinen Formel (IV)

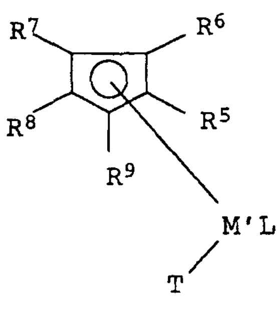

(IV),

in der die Substituenten folgende Bedeutung haben:

M' Lanthan, Cer, Samarium, Europium, Ytterbium,

L Fluor, Chlor, Brom, Iod, Wasserstoff, $C_1$- bis $C_{10}$-Alkyl, $C_6$- bis $C_{15}$-Aryl, Alkylaryl mit 1 bis 10 C-Atomen im Alkylrest und 6 bis 20 C-Atomen im Arylrest, $-OR^{10}$ oder $-NR^{10}R^{11}$,

wobei

$R^{10}$ und $R^{11}$ — $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^5$ bis $R^9$ — Wasserstoff, $C_1$- bis $C_{10}$-Alkyl,
5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder $Si(R^{12})_3$ mit

R12 — $C_1$- bis $C_{10}$-Alkyl, $C_3$- bis $C_{10}$-Cycloalkyl oder $C_6$- bis $C_{15}$-Aryl,

T — für L oder

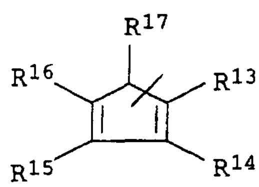

steht,

wobei die Reste

$R^{13}$ bis $R^{17}$ — Wasserstoff, $C_1$- bis $C_{10}$-Alkyl,
5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder $Si(R^{18})_3$ mit

$R^{18}$ — $C_1$- bis $C_{10}$-Alkyl, $C_6$- bis $C_{15}$-Aryl oder
$C_3$- bis $C_{10}$-Cycloalkyl.

Die Synthese derartiger Komplexverbindungen kann nach an sich bekannten Methoden erfolgen. Beispiele für entsprechende Herstellungsverfahren sind u.a. im Journal of Organometallic Chemistry, 1993, 450, S. 121-124 beschrieben. Es können auch Mischungen verschiedener Metallkomplexe eingesetzt werden.

Für die anionische Polymerisation mittels Lanthanocenen werden bevorzugt vinylaromatische Verbindungen, insbesondere Styrol, als Lösungsmittel verwendet. Die für die anionische Polymerisation nach dem erfindungsgemäßen Verfahren grundsätzlich in Frage kommenden Lösungsmittel (s.a. Formel III)) können als solche oder im Gemisch mit weiteren inerten Lösungsmitteln eingesetzt werden.

Es hat sich jedoch als vorteilhaft erwiesen, vornehmlich aus Gründen der Löslichkeit des Metallocen-Initiators, zumindest geringe Mengen einer weiteren Lösungsmittelkomponente zu verwenden. Grundsätzlich kommen hierfür die bereits vorhergehend beschriebenen Lösungsmittel und Lösungsmittelsysteme in Frage. Als geeignet hat sich zum Beispiel Tetrahydrofuran erwiesen. Der Anteil dieser Komponente an der Gesamtlösungsmittelmenge liegt bevorzugt im Bereich von 0,1 bis 95, besonders bevorzugt im Bereich von 0,5 bis 50 und insbesondere im Bereich von 0,5 bis 20 Vol.-%.

Grundsätzlich können der Metallocen-Initiator, das Lösungsmittel bzw. die Lösungsmittelkomponenten und die Monomeren in unterschiedlichster Reihenfolge miteinander gemischt werden. Beispielsweise kann der Metallocen-Initiator vorgelegt werden, gegebenenfalls gelöst in einem geeigneten Lösungsmittel, z.B. Tetrahydrofuran, und die Lösungsmittel- und Monomerzugabe anschließend erfolgen.

Bevorzugt werden zunächst das oder die Monomerbausteine sowie das Lösungsmittel oder Lösungsmittelsystem vorgelegt und mit einer Metallocen-Initiatorlösung versetzt.

Die Umsetzung kann beispielsweise bei einer Temperatur im Bereich von -78 bis +100°C durchgeführt werden. Bevorzugt wird ein Temperaturbereich von -30 bis +80°C verwendet. Die Reaktionstemperatur kann konstant

gehalten oder in kontrollierter Weise verändert, bevorzugt gesteigert werden. Zur Erreichung hoher Molekulargewichte $M_n$ und enger Molekulargewichtsverteilungen ist es nicht abträglich, wenn sich das Reaktionsgemisch infolge der freiwerdenden Reaktionsenthalpie innerhalb kurzer Zeit erwärmt.

Es hat sich als vorteilhaft herausgestellt, die verwendeten Monomeren sowie das Lösungsmittel vor der Reaktion zur Entfernung von Restwasserspuren mit geeigneten Trocknungsmitteln zu behandeln. Beispielsweise können zu diesem Zweck Aluminiumoxid-Perlen eingesetzt werden. Des Weiteren hat es sich als vorteilhaft herausgestellt, insbesondere zur Erzielung reproduzierbar hoher Molekulargewichte $M_n$, dem Reaktionsgemisch Aluminiumorganylverbindungen oder Bororganylverbindungen zuzugeben. Auch Hydride, wie Diisobutylaluminiumhydrid oder Calciumhydrid sind zu diesem Zweck geeignet. Bevorzugt werden Lösungen von Aluminiumorganylen in inerten Lösungsmitteln wie Toluol oder Hexan verwendet. Geeignete Aluminiumorganyle sind zum Beispiel Trialkyl- und Triarylaluminiumverbindungen sowie Aluminiumorganyle mit Alkyl- und Arylresten. Ebenso kommen Mischungen dieser Verbindungen in Frage. Bevorzugt werden Trialkylaluminiumverbindungen, insbesondere Triethylaluminium oder Tri-i-butylaluminium eingesetzt. Grundsätzlich sind jedoch leicht hydrolisierbare Verbindungen geeignet, die mit den Monomerbausteinen und Lösungsmitteln keine Reaktion eingehen. Diese werden zu den Monomer- und Lösungsmittelkomponenten gegeben, bevor die Zugabe des Metallocen-Initiators erfolgt.

Nach erfolgtem Molekulargewichtsaufbau kann die Polymerisationsreaktion durch Zugabe einer protischen Substanz, wie vorgehend für anionische Initiatorsysteme beschrieben, abgebrochen werden. Als geeignet haben sich insbesondere Mischungen aus Methanol und Essigsäure, z.B. in einem Verhältnis im Bereich von 100:1 bis 1:100, bevorzugt von 10:1 bis 1:10 erwiesen.

Mittels anionischer Polymerisation lassen sich in einer ersten Verfahrensstufe $a_1$) oder $a_2$) des erfindungsgemäßen Verfahrens Homo-, Co- oder Blockcopolymerisate auf der Basis von Acrylaten und Methacrylaten erhalten. Beispielsweise gelingt die Herstellung von n-Butylacrylat/2-Ethylhexylacrylat-, n-Butylacrylat/ Methylmethacrylat-, Methylmethacrylat/n-Butylacrylat/Methylmethacrylat- oder Methylmethacrylat/2-Ethylhexylacrylat-Blockcopolymeren.

Da die genannten Polymerisate die Grundlage für einen "weichen" Kautschukpfropfkern bilden sollen, sind solche Acrylatmonomere geeignet, deren Homopolymerisate eine Glasübergangstemperatur($T_g$)-Wert kleiner 0°C, bevorzugt kleiner -10°C, haben. Hierunter fallen zum Beispiel Methyl-, Ethyl-, n-Propyl-, i-Propyl-, n-Butyl-, i-Butyl-, t-Butyl-, n-Pentyl-, i-Pentyl-, n-Hexyl-, n-Heptyl-, n-Octyl-, Ethylhexyl-, n-Nonyl-, n-Decyl, n-Dodecyl-, n-Tetradecyl-, n-Hexadecyl-, n-Octadecyl- oder n-Eicosylacrylat sowie Methoxybutylacrylat, 2-Methoxyethylacrylat.

Der Gehalt dieser Monomere in der Pfropfgrundlage liegt bevorzugt im Bereich von 30 bis 100 Gew.-%, besonders bevorzugt im Bereich von 50 bis 100 Gew.-% und insbesondere im Bereich von 80 bis 100 Gew.-%.

Für die Herstellung einer weichen Pfropfgrundlage K werden bevorzugt Acrylatmonomere der Verbindungsklassen i) oder ii) oder i) und ii) in einer Menge, bezogen auf das Gesamtgewicht der Pfropfgrundlage K, im Bereich von 30 bis 100, bevorzugt 50 bis 100 und insbesondere 80 bis 100 Gew.-%, Monomere der Verbindungsklassen iii) oder iv) oder iii) und iv) in einer Menge im Bereich von 0 bis 20, bevorzugt 0 bis 17, besonders bevorzugt 0 bis 15 und insbesondere 0 bis 10 Gew.-% und Monomere der Verbindungsklasse v) in einer Menge im Bereich on 0 bis 20, bevorzugt im Bereich von 0 bis 5 Gew.-% eingesetzt. Die bevorzugten Mengenbereiche können je nach eingesetztem Monomer noch geringfügig variieren.

Geeignete Acrylatmonomere der Verbindungsklassen i) und ii) sind beispielsweise Ethylacrylat, n-Butylacrylat, 2-Ethylhexylacrylat, n-Hexylacrylat, n-Heptylacrylat, n-Octylacrylat, n-Dodecylacrylat (≙ Laurylacrylat), 2-Ethylbutylacrylat, 3-Methylbutylacrylat, wobei n-Butylacrylat und 2-Ethylhexylacrylat ganz besonders geeignet sind.

Geeignete Monomere der Verbindungsklassen iii) und iv) sind zum Beispiel die Diester des Ethandiols oder von Butan-1,4-diol mit Acryl- oder Methacrylsäure sowie insbesondere Dihydrodicyclopentadienylacrylat, 2-Allyloxyethylacrylat und die Allylester der Acrylsäure und der Methacrylsäure.

Grundsätzlich fallen unter die Verbindungsklasse iv) auch Diacrylate und Dimethacrylate von 1,n-Alkylendiolen, wie Ethylenglykol, Propylenglykol, 1,3-Butylenglykol, 1,4-Butylenglykol und Tetraethylenglykol, die polyfunktionellen Acrylate und Methacrylate des Glycerins, Pentaerythrits, Inosits und ähnlicher Zuckeralkohole.

Geeignete Monomere der Verbindungsklasse v) sind zum Beispiel die Acryl- und Methacrylamide von Ethylendiamin und homologer aliphatischer Di- und Polyamine, Dimethylaminoethylacrylat, Diethylaminoethylacrylat, 2-Phenoxyethylacrylat, 2-Phenoxyethylmethacrylat, Phenylacrylat, Phenylmethacrylat sowie Methacryloylalkoxysiloxane der allgemeinen Formel (V)

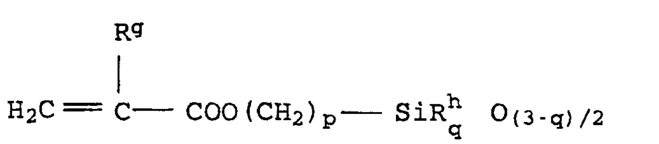
(V),

in der die Substituenten und Indices die folgende Bedeutung haben:

$R^g$ Wasserstoff oder Methyl,

$R^h$ $C_1$- bis $C_{10}$-Alkyl, wie Methyl, Ethyl, i-Propyl, n-Propyl, i-Butyl, n-Butyl, t-Butyl, $C_6$- bis $C_{14}$-Aryl, auch substituiert, wie Phenyl oder Tolyl,

p ganze Zahlen zwischen 0 und 7,

q 0, 1 oder 2.

Beispiele für letztgenannte Verbindungen sind N,N-Dimethylarylamid, N,N-Diethylacrylamid, N,N-Dimethylmethacrylamid, N,N-Diethylmethacrylamid, N,N-Di-i-propylacrylamid, N,N-Di-n-butylacrylamid, N,N-Di-i-propylmethacrylamid, N,N-Di-n-butylmethacrylamid.

Die Pfropfgrundlage K setzt sich in einer ganz besonders bevorzugten Ausführungsform zusammen aus

80 bis 100 Gew.-% n-Butylacrylat oder 2-Ethylhexylacrylat oder einer beliebigen Mischung von n-Butylacrylat und 2-Ethylhexylacrylat,

0 bis 20 Gew.-% Allylmethacrylat, Allylacrylat oder Dihydrodicyclopentadienylacrylat oder einer beliebigen Mischung aus Allylmethacrylat, Allylacrylat oder Dihydrodicyclopentadienylacrylat und

0 bis 20 Gew.-% einer oder mehrerer Verbindungen ausgewählt aus der Verbindungsklasse v).

Des Weiteren werden in der ersten Stufe $a_2$) des erfindungsgemäßen Verfahrens Blockcopolymere hergestellt. Die Blockcopolymere können Zweiblock- oder Multiblock-Charakter besitzen. Letztere können linear, verzweigt, sternförmig oder dendrimerartig sein.

Die Blockcopolymeren können als solche aus Acrylat- und/oder Methacrylatmonomeren wie bereits beschrieben für Homo- und Copolymere in der ersten Verfahrensstufe $a_1$) hergestellt werden. Darüber hinaus können Blockcopolymere in Gegenwart zuvor hergestellter Homo- oder Copolymere erhalten werden. Die umgekehrte Vorgehensweise ist ebenfalls möglich. Separat hergestellte Blockcopolymere können auch zu einem beliebigen Zeitpunkt den Reaktionsgemischen der Verfahrensstufen $a_1$), $a_2$) und b) zugegeben werden.

Hierfür sind insbesondere Zwei- und Dreiblockcopolymere geeignet, bei denen der eine Block mit der weichen Pfropfgrundiage K und ein anderer Block mit dem Pfropfhüllen- und Matrixmaterial der kautschukmodifizierten Formmasse verträglich oder teilverträglich ist.

Es setzt sich demnach mindestens ein Block aus Monomeren zusammen, deren Homopolymere einen $T_g$-Wert kleiner 0°C, bevorzugt kleiner -10°C aufweisen. Mindestens ein anderer Copolymerblock setzt sich daneben zusammen z.B. aus einem Methacrylatderivat, insbesondere Methylmethacrylat.

Des Weiteren sind Blockcopolymere bevorzugt, bei denen mindestens ein Block Monomeren mit einer oder mehreren Doppelbindungen in der Estereinheit enthält, z.B. Allylacrylat, Allylmethacrylat, 2-Allyloxyethylacrylat oder Dihydrodicyclopentadienylacrylat. Der Anteil dieser Monomere an der gesamten Blockstruktur liegt üblicherweise im Bereich von 0 bis 99 Gew.-%, bevorzugt im Bereich von 0 bis 45 Gew.-% und insbesondere im Bereich von 0 bis 25 Gew.-%.

Ebenfalls bevorzugt sind Blockcopolymere, die mindestens einen Block aufweisen, der aus Monomeren gebildet wird, die im Esterrest mindestens ein tertiäres oder mindestens ein benzylisches Wasserstoffatom aufweisen. Hierunter fällt z.B. auch 2-Ethylhexylacrylat. Der Anteil dieser Monomere an der gesamten Blockstruktur liegt üblicherweise im Bereich von 0 bis 99 Gew.-%, bevorzugt im Bereich von 10 bis 99 Gew.-% und insbesondere im Bereich von 20 bis 80 Gew.-%.

Die gemäß der ersten Stufe $a_1$) bzw, $a_2$) des erfindungsgemäßen Verfahrens mittels anionischer Polymerisation erhältlichen Homo-, Co- und Blockcopolymerisate sind unabhängig vom eingesetzten Monomer oder Monomerengemisch mit einer Molmasse $\overline{M}_n$ im Bereich von 5000 bis 2000000 g/mol, bevorzugt im Bereich von 5000 bis 500000 g/mol und besonders bevorzugt im Bereich von 5000 bis 250000 g/mol herstellbar. D.h. auch Polymerisate und Copolymerisate, enthaltend Monomereinheiten mit einem tertiären oder benzylischen Wasserstoffatom im Esterrest, wie 2-Ethylhexylacrylat, oder mit mindestens einer Doppelbindung in der Estereinheit, wie Allylacrylat, sind ohne weiteres mit mittleren Molekulargewichten $\overline{M}_n$ größer 60000 g/mol und auch größer 100000 g/mol zugänglich.

Der Anteil der Pfropfgrundlage K am Gemisch (A) liegt bevorzugt im Bereich von 1 bis 90 Gew.-%, besonders bevorzugt im Bereich von 2 bis 60 Gew. % und ganz besonders bevorzugt im Bereich von 3 bis 30 Gew. -%.

Der gemäß Stufe $a_1$) bzw. $a_2$) des erfindungsgemäßen Verfahrens erhaltene Kautschuk liegt in einem Lösungsmittel bzw. in einem Reaktionsmedium, wie vorhergehend beschrieben, vor.

Durch Zugabe von gängigen radikalischen Initiatoren, zum Beispiel beschrieben in H. Gausepohl et al., Kunststoff-Handbuch, Polystyrol, 1996, S. 106, zum nach Verfahrensschritt $a_1$) bzw. $a_2$) erhaltenen Reaktionsgemisch, wird die Polymerisation der in Schritt $a_1$) bzw. $a_2$) noch als Lösungs- bzw. Reaktionsmedium für die anionische Polymerisation dienenden ungesättigten Verbindungen gestartet. Als geeignete Initiatoren seien beispielsweise genannt 1,1-Bis-(tert.-butylperoxy)-cyclohexan, 1,1-Bis-(tert.-butylperoxy)-3,3,5-trimethylcyclohexan und Azoisobutyronitril. Zusätzlich sind die im zitierten Kunststoff-Handbuch Polystyrol auf S. 106 aufgelisteten Initiatoren hiermit ausdrücklich aufgenommen.

Grundsätzlich kommen Peroxide, z.B. Peroxosulfate, Azoverbindungen, Hydroperoxide, Perester, z.B. Dibenzoylperoxid, oder Perketale als Polymerisationsinitiatoren in Betracht.

Enthalten die nach Verfahrensschritt $a_1$) bzw. $a_2$) erhaltenen Kautschuke keine radikalisch angreifbaren Monomereinheiten, so liegen diese Partikel in der Regel ungepfropft in den erhaltenen Formmassen vor.

Bei der Herstellung kautschukmodifizierter Formmassen werden nach dem erfindungsgemäßen Verfahren bevorzugt solche Kautschuke bzw. Partikel in der ersten Verfahrensstufe $a_1$) bzw. $a_2$) hergestellt, die Möglichkeiten zur radikalischen Pfropfung besitzen.

Hierzu eignen sich z.B. Kautschukgrundlagen K, die bevorzugt als Bestandteil von Copolymerisaten oder Blockcopolymerisaten Acrylat- oder Methacrylatmonomereinheiten enthalten, die einen Esterrest mit einem tertiären oder benzylischen Wasserstoffatom oder mit einer ungesättigten Doppelbindung enthalten. Bevorzugt sind in diesem Zusammenhang die unter die vorhergehend definierten Verbindungsklassen ii) und iii) fallenden Verbindungen. Insbesondere zu nennen sind Allylacrylat, Allylmethacrylat, 2-Allyloxyethylacrylat, 2-Allyloxyethylmethacrylat und Dihydrodicyclopentadienylacrylat sowie 2-Ethylhexylacrylat.

Unter den Bedingungen der radikalischen Polymerisation bilden die genannten Monomereinheiten vermutlich Kohlenstoffradikale, die sowohl als Pfropf zentren als auch zur Vernetzung des Kautschukpartikels dienen können.

Mit Styrol, der bevorzugten vinylaromatischen Verbindung, als Lösungsmittel erhält man auf diese Art und Weise schlagzähmodifiziertes Polystyrol, auch bekannt unter dem Namen "High Impact Polystyrene" (HIPS), bei dem die "weichen" Kautschukteilchen mit harten Styrolpolymeren gepfropft sind, was zu in einer "harten" Polystyrolmatrix eingelagerten Teilchen mit weich/hart-Morphologie führt.

Daneben sind unter den vinylaromatischen Verbindungen als Lösungsmittel (Schritt $a_1$) bzw. $a_2$)) bzw. Reaktionsteilnehmer (Schritt b)) für das erfindungsgemäße Verfahren $\alpha$-Methylstyrol sowie mit $C_1$- bis $C_8$-Alkyl kernalkylierte Styrole, wie p-Methylstyrol oder t-Butylstyrol ebenfalls besonders bevorzugt.

In einer weiteren bevorzugten Ausführungsform des erfindungsgemäßen Verfahrens können dem in dem ersten Verfahrensschritt $a_1$) bzw. $a_2$) erhaltenen Reaktionsgemisch, bevor der Verfahrensschritt b) eingeleitet wird, weitere olefinisch ungesättigte Verbindungen, z.B. solche die unter die allgemeine Formel (III) fallen, zugegeben werden. Dazu hat sich als gangbarer Weg herausgestellt, nach erfolgtem Molekulargewichtsaufbau die anionische Polymerisationsreaktion zuvor auf herkömmliche Art und Weise durch Zugabe einer protischen Substanz abzubrechen. Hierfür eignen sich Alkohole, wie Methanol, Ethanol oder i-Propanol, Säuren, wie Ameisensäure oder Essigsäure, Wasser oder eine beliebige Mischung dieser Verbindungen.

Beispielsweise kommen für diese nach der Verfahrensstufe $a_1$) bzw. $a_2$) zugesetzten olefinisch ungesättigten Verbindungen auch $C_1$- bis $C_8$-Alkylester der Acrylsäure und/oder Methacrylsäure in Frage, besonders solche, die sich vom Methanol, Ethanol, n- und iso-Propanol, sek.-, tert.- und iso-Butanol, Pentanol, Hexanol, Heptanol, Octanol und 2-Ethylhexanol und vor allem vom n-Butanol ableiten. Besonders bevorzugt ist Methylmethacrylat.

Weiterhin seien als weitere Monomere genannt Maleinimid, N-Methyl-, N-Phenyl- und N-Cyclohexylmaleinimid, Acrylsäure, Methacrylsäure, Maleinsäure und Fumarsäure sowie deren Anhydride, Stickstoff-funktionale Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid, Hydroxyethylacrylat, Methacrylnitril, Acrylnitril.

Von den letztgenannten Monomeren werden Acrylnitril, Maleinsäureanhydrid, Methacrylnitril und Maleinimid bevorzugt verwendet, wobei Acrylnitril besonders bevorzugt ist.

Unter die Definition der erfindungsgemäßen kautschukmodifizierten Formmassen fallen nicht nur Formmassen, in die ein- oder mehrschalige Kautschukpartikel eingelagert sind, sondern auch die mittels des erfindungsgemäßen Verfahrens erhältlichen Kautschuklösungen als solche.

In der zweiten Stufe des erfindungsgemäßen Verfahrens kann die Polymerisation entweder durchgehend in Lösung oder Masse durchgeführt werden oder nach einem Umsatz von größer als 10 % als Suspensionspolymerisation fortgeführt werden.

Wird in Lösung oder Masse polymerisiert, kann die Reaktion abgebrochen werden, indem die Monomeren entfernt werden, z.B. durch Entgasung in einem Extruder.

Die Polymerisationstemperatur bei Stufe b) liegt normalerweise zwischen 0 und 220°C, bevorzugt zwischen 50 und 180°C.

Die Aufarbeitung des nach Beendigung der Stufe b) erhaltenen Reaktionsgemisches geschieht zum Beispiel

im Fall der Suspensionspolymerisation durch Zentrifugieren oder Filtrieren oder im Fall der Massepolymerisation durch Granulierung. Die erhaltenen Polymerprodukte können z.B. mit Wasser gewaschen und sodann im Vakuum bei erhöhter Temperatur getrocknet werden.

Mit dem erfindungsgemäßen Verfahren lassen sich kautschukmodifizierte Formmassen herstellen, die auch bei tieferen Temperaturen zufriedenstellende mechanische Eigenschaften aufweisen und darüber hinaus unproblematisch in der Schmelze verarbeitbar sind. Die Werte für die Schlagzähigkeit, Kerbschlagzähigkeit und Lochkerbschlagzähigkeit fallen selbst bei Temperaturen von -40°C, -50°C und darunter nicht merklich ab.

Beispielsweise können selbst bei Temperaturen von -50°C mit den erhaltenen Formmassen Schlagzähigkeiten (bestimmt nach DIN 53 453-n) oberhalb von 20 $kJm^{-2}$, aber auch oberhalb von 30 $kJm^{-2}$ und sogar 40 $kJm^{-2}$ erhalten werden.

Für die Lochkerbschlagzähigkeit (nach DIN 53 753.L-3-0) werden auch bei -50°C regelmäßig Werte größer 5, aber auch größer 7 bzw. größer 9 $kJm^{-2}$ erhalten.

Die nach dem erfindungsgemäßen Verfahren erhaltenen kautschukmodifizierten Formmassen zeichnen sich dadurch aus, daß sie gegenüber nach herkömmlichen Suspensions- oder Lösungspolymerisationsverfahren hergestellten Formmassen selbst nicht in Spuren Rückstände an Emulgatoren oder Fällungsreagenzien aufweisen. Folglich ist Stippenbildung von vornherein auszuschließen. Darüber hinaus zeichnen sich die Formmassen durch sehr gute rheologische und mechanische Eigenschaften aus. Sie lassen sich zudem in bekannter Weise zu Fasern, Folien und Formkörpern verarbeiten. Diesen Materialien haftet nicht der nachteilige Effekt des Ausschwitzens an.

Darüber hinaus bietet das erfindungsgemäße Verfahren den Vorteil, daß sich die Formmassen ohne aufwendigen Wechsel des Reaktionsmediums in einer sogenannten "Eintopfreaktion" herstellen lassen.

Außer den beschriebenen Komponenten können die kautschukmodifizierten Formmassen noch Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Mittel üblichen Mengen enthalten.

Des Weiteren können die erfindungsgemäßen kautschukmodifizierten Formmassen Bestandteil eines Polymerblends sein. Als Blendkomponenten kommen Thermoplaste in Frage. Hierzu zählen z.B. Polycarbonate, Polyester, Polyamide, Polyalkylmethacrylate, Polystyrol und Styrolpolymerisate, worunter Homo- wie auch Copolymerisate zu verstehen sind, sowie auch hochtemperaturbeständige Poly(ether)sulfone.

Geeignete Polycarbonate sind hinlänglich bekannt. Deren Herstellung und Eigenschaften sind z.B. beschrieben im Kunststoff-Handbuch 3/1 "Technische Thermoplaste, Polycarbonate, Polyacetale, Polyester, Celluloseester", Hrsg. L. Bottenbruch, Hanser-Verlag, München, 1992, S. 117-299.

Geeignete Polycarbonate sind beispielsweise solche auf Basis von Diphenolen der allgemeinen Formel Ψ

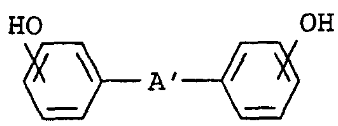

(Ψ),

worin A' eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel Ψ sind beispielsweise 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-cyclohexan. Weitere bevorzugte Diphenole sind Hydrochinon oder Resorcin. Besonders bevorzugt sind 2,2-Bis-(4-hydroxyphenyl)-propan und 1,1-Bis-(4-hydroxyphenyl)-cyclohexan sowie 1,1-Bis-(4-hydroxyphenyl)-2,3,5-trimethylcyclohexan und 1,1-Bis-(4-hydroxyphenyl)-3,3,5-trimethylcyclohexan.

Geeignete Polyester sind ebenfalls an sich bekannt und in der Literatur beschrieben (Kunststoff-Handbuch 3/1 "Technische Thermoplaste, Polycarbonate, Polyacetale, Polyester, Celluloseester", Hrsg. L. Bottenbruch, Hanser-Verlag, München, 1992, S. 7 - 115). Sie leiten sich im allgemeinen von einer aromatischen Dicarbonsäure ab, wobei das aromatische Gerüst z.B. auch mit Halogen, wie Chlor oder Brom, oder mit geradkettigen oder verzweigten Alkylgruppen, bevorzugt $C_1$- bis $C_4$-, substituiert sein kann.

Bevorzugte Dicarbonsäuren sind Naphthalindicarbonsäure, Terephthalsäure und Isophthalsäure oder Dicarbonsäuren, die in bestimmtem Umfang (bis zu 10 mol-%) durch aliphatische oder cycloaliphatische Dicarbonsäuren ersetzt sein können. Als besonders geeignete Polyesterkomponente sei z.B. Polybutylenterephthalat genannt. Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Geeignete Polyamide sind an sich bekannt. Bevorzugt werden ganz allgemein solche Polyamide eingesetzt, die einen aliphatisch teilkristallinen oder teilaromatischen sowie amorphen Aufbau besitzen. Gleichfalls sind Polyamid-Blends einsetzbar, wie sie z.B. unter dem Handelsnamen Ultramid® (BASF AG) erhältlich sind.

Als Poly(ether)sulfone sind z.B. Verbindungen wie das unter die Marke Ultrason® E bzw. S (BASF AG) fallende Produkt geeignet.

Unter Polymethacrylate fallen insbesondere Polymethylmethacrylat (PMMA) sowie die Copolymere auf der Basis von Methylmethacrylat mit bis zu 40 Gew.-% an weiterem copolymerisierbaren Monomer. Derartige Polymermaterialien werden unter den Marken Lucryl® (BASF AG) oder Plexiglas® (Röhm GmbH) vertrieben.

Die Herstellung der erfindungsgemäßen Formmassen kann nach an sich bekannten Mischverfahren bei Temperaturen von in der Regel 150 bis 300°C erfolgen, beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Bevorzugt wird als Mischvorrichtung ein Extruder verwendet.

Beispiele

Die Beispiele 1 bis 8 wurden unter Ausschluß von Sauerstoff und Feuchtigkeit mit der üblichen Schutzgastechnik durchgeführt.

Die zahlen- und gewichtsmittleren Molekulargewichte $M_n$ und $M_w$ wurden mittels Gelpermeationschromatographie (GPC) in Tetrahydrofuran bei 35°C relativ zu einem eng verteilten Polymethylmethacrylatstandard bestimmt. Die Detektion erfolgte mit einem Brechungsindex (RI)-Detektor Waters 410.

Die monomeren Acrylate und Methacrylate sowie Styrol wurden mittels Stickstoffspülung und Lagern über Aluminiumoxid gereinigt und anschließend im Vakuum destilliert.

Als Polyvinylpyrrolidon wurde das Handelsprodukt Luviskol® K 90 der Fa. BASF AG verwendet. Das eingesetzte Luviskol® K 90 besaß, gemessen als 1 %ige Lösung in Wasser bei 25°C, einen K-Wert von 90 (für die K-Wert-Bestimmung siehe Cellulose Chemie, 1932, 13, S. 358-364).

$(C_5Me_5)_2$ Sm $(THF)_2$ wurde analog einer Vorschrift von Schumann et al., J. New Chem. 1995, 19, S. 491 synthetisiert.

Als Polyvinylalkohol wurde das Handelsprodukt Ertivinol® der Fa. Erkol S.A. eingesetzt. Tetranatriumdiphosphat wurde von der Fa. Merck bezogen.

A. Anionische Polymerisation in Styrol

Beispiel 1

Herstellung von Polyethylhexylacrylat

Zu 113 ml 2-Ethylhexylacrylat (EHA) gab man bei Raumtemperatur tropfenweise 2,25 ml Al-$(iBu)_3$ (1 M in Toluol) und überführte die erhaltene Mischung in 300 ml Styrol. Bei -20°C wurde zügig unter starkem Rühren eine Lösung von 608 mg $(C_5Me_5)_2Sm(THF)_2$ in 15 ml THF zugegeben. Es wurde ein Temperaturanstieg auf + 39°C beobachtet. Nach 1 h wurde die Polymerisation durch die Zugabe von 1 ml einer Methanol/Essigsäure-Mischung (10/1) abgebrochen.

Beispiel 2

Herstellung von Poly[2-ethylhexylacrylat-co-dihydrodicyclopentadienylacrylat] mit einem Anteil von 10 Gew.-% an Dihydrodicyclopentadienylacrylat

Zu 101,5 ml EHA und 9,3 ml Dihydrodicyclopentadienylacrylat (DCPA) in 300 ml Styrol gab man bei Raumtemperatur tropfenweise 2,25 ml Al-$(iBu)_3$ (1 M in Toluol). Bei -20°C wurde zügig unter starkem Rühren eine Lösung von 595 mg $(C_5Me_5)_2Sm(THF)_2$ in 15 ml THF zugegeben. Es wurde ein Temperaturanstieg auf + 35°C beobachtet. Nach 1 h wurde die Polymerisation durch Zugabe von 1,2 ml einer Methanol/Essigsäure-Mischung (1:1) sowie 3,6 mg 4-tert.-Butylbrenzkatechin abgebrochen.

Analog Beispiel 2 wurden Copolymere mit 2-Ethylhexylacrylat als Hauptmonomerkomponente und Allylmethacrylat (Bsp. 3) bzw. 2-Allyloxyethylacrylat (6,6 statt 10 Gew.-%) (Bsp. 4) als Zweitkomponente hergestellt.

In Beispiel 5 wurde abweichend von Beispiel 2 die Menge an Dihydrodicyclopentadienylacrylat so gewählt, daß 7,5 Gew.-% in das Copolymer eingebaut wurden (s. a. Tabelle 1).

Beispiel 6

Herstellung von Poly[2-ethylhexylacrylat-co-dihydrodicyclopentadienylacrylat-co-laurylacrylat]

Zu 67,6 ml EHA, 9,3 ml DCPA, 34,5 ml Laurylacrylat (LA) und 300 ml Styrol gab man bei Raumtemperatur tropfenweise 2,75 ml Al-(i-Bu)$_3$ (1 M in Toluol). Bei -20°C wurde zügig unter starkem Rühren eine Lösung von 598 mg $(C_5Me_5)_2Sm(THF)_2$ in 15 ml THF zugegeben. Es wurde ein Temperaturanstieg auf +32°C beobachtet. Nach 1 h wurde die Polymerisation durch Zugabe von 1,2 ml einer Methanol/Essigsäure-Mischung (1:1) und 3,6 mg 4-tert.-Butyl-brenzkatechin) abgebrochen.

Beispiel 7

Herstellung von Poly[methylmethacrylat-b-2-ethylhexylacrylat-b-methylmethacrylat]

Zu 45 ml Methylmethacrylat (MMA) und 45 ml EHA in 300 ml Styrol gab man bei Raumtemperatur tropfenweise 2,25 ml A1-(iBu)$_3$ (1 M in Toluol). Bei - 10°C wurde zügig unter starkem Rühren eine Lösung von 1200 mg $(C_5Me_5)_2Sm(THF)_2$ in 30 ml THF zugegeben. Es wurde ein Temperaturanstieg auf + 43,5°C beobachtet. Die Polymerisation wurde 30 Minuten nach der Samarocen-Zugabe durch Zugabe von 1,2 ml einer Methanol/Essigsäure-Mischung (1:1) und 3,6 mg 4-tert.-Butylbrenzkatechin abgebrochen.

Beispiel 8

Herstellung von Poly[2-ethylhexylacrylat-co-dihydrodicyclopentadienylacrylat] mit einem Anteil von 10 Gew.-% an Dihydrodicyclopentadienylacrylat im Rohrreaktor.

Zur Förderung von Initiator-, Additiv- und Monomerlösung wurde eine pulsationsarme, präparative HPLC-Pumpe vom Typ Dynamax SD1 der Fa. Rainin verwendet. Als Reaktionsraum diente ein auf -20°C gekühltes, 10 m langes Metallrohr mit einem Innendurchmesser von 1,17 mm.

Eine 0,0145 molare Lithiumdiisopropylamidlösung in Ethylbenzol (50 ml/min) und eine 0,144 molare Lösung von 2-Methoxylithiumethoxid in Ethylbenzol (25 ml/min) wurden über eine erste Mischdüse miteinander vermengt, auf -20°C gekühlt und, über eine 2. Mischdüse, mit einer auf -20°C gekühlten Monomerlösung in Styrol, enthaltend 0,87 mol/l EHA und 0,10 mol/l DCPA (75 ml/min), versetzt. Die mittlere Verweilzeit im Rohrreaktor betrug 4,3 sec. Am Rohrende wurde über eine weitere Düse eine 1:1-Mischung aus Methanol und Essigsäure (2 ml/min) als Abbruchreagenz eingemischt. Gemäß GC-Analyse betrug der Umsatz an EHA 95 Gew.-% und an DCPA 96 Gew.-%. Mittels DSC-Analyse (Aufheizrate: 20°C/min) wurde für das erhaltene Copolymer eine Glastemperatur $T_g$ von -55°C ermittelt.

Weitere Angaben zu den in den Beispielen 1 bis 8 hergestellten Kautschuken sind der Tabelle 1 zu entnehmen.

Tabelle 1

| Bsp. | Comonomer [a] [Gew.-%] | $M_w$ [b] | $M_w/M_n$ [b] |
|---|---|---|---|
| 1 | - | 275300 | 1,5 |
| 2 | 10 DCPA | 393300 | 1,6 |
| 3 | 10 AMA | 313700 | 1,5 |
| 4 | 6,6 AOEA | 305000 | 1,4 |
| 5 | 7,5 DCPA | 361500 | 1,7 |
| 6 | 10 DCPA/30LA | 487000 | 2,4 |
| 7 | 50 MMA | 97100 | 1,3 |
| 8 | 10 DCPA | 218900 | 2,2 |

[a] AMA: Allylmethacrylat, DCPA: Dihydrodicyclopentadienylacrylat, AOEA: 2-Allyloxyethylacrylat, LA: Laurylacrylat, MMA: Methylmethacrylat

[b] bestimmt mittel Gelpermeationschromatographie mit einem Polymethylmethacrylatstandard

B. Radikalische Polymerisation

Beispiele 9 bis 16

Zu einer gemäß den Beispielen 1 bis 7 erhaltenen Lösung an Polyethylhexylacrylathomopolymer oder -copolymer in Styrol fügte man Styrol und gegebenenfalls Acrylnitril hinzu sowie ebenfalls Benzoylperoxid (0,1 Gew. -%, bezogen auf die Monomermenge) und gegebenenfalls t-Dodecylmercaptan. Die Polymerisation wurde in einem mit einem Ankerrührer versehenen Stahlkessel durchgeführt. Der Gewichtsanteil an Polyethylhexylacrylathomopolymer bzw. -copolymer betrug (der Anteil an Polyethylhexylacrylat in den Blockcopolymeren wurde in den Beispielen 17 und 18 mit eingerechnet) jeweils 8 Gew.-%, bezogen auf die eingesetzte Menge an Monomeren und (Co)polymeren.

Um Sauerstoff aus der Reaktionslösung zu entfernen, wurde ein Stickstoffdruck von 3 bar angelegt und anschließend wieder entspannt. Die Polymerisationstemperatur wurde unter Rühren (150 Upm) auf 86°C gebracht. Nach einem Umsatz von etwa 30 % (s. Tabelle 2) gab man 0,1 mol-% Dicumylperoxid und nach weiteren 5 Minuten eine wäßrige Lösung, enthaltend Luviskol® K90 (1,0 Gew.-%, bezogen auf die eingesetzte Menge an Wasser), Natriumdiphosphat (0,1 Eew.-%, bezogen auf die eingesetzte Menge Wasser) und Ertivinol® 30/92 (0,3 Gew.-%, bezogen auf die eingesetzte Menge an Wasser).
Das Volumenverhältnis wäßrige Lösung zu anpolymerisierter Monomerlösung betrug 3,3:1.
Die erhaltene Dispersion wurde unter starkem Rühren (300 Upm) für 3 h bei 110°C, für weitere 3 h bei 130°C und schließlich für 6 h bei 140°C gehalten. Nach dem Abkühlen wurde das Polymerprodukt mittels Filtration isoliert und über Nacht bei 60°C im Vakuum getrocknet. (Weitere Polymerisationsparameter sind der Tabelle 2 zu entnehmen).

Beispiel 17

Zu dem nach Beispiel 3 erhaltenen Polymerisationsgemisch gab man soviel an nach Beispiel 7 erhaltenem Polymerisationsgemisch, daß der Anteil an Poly [methylmethacrylat-b-2-ethylhexylacrylat-b-methylmethacrylat] im Reaktionsgemisch 4 Gew.-%, bezogen auf das EHA/AMA-Copolymer und die Menge an Monomeren, betrug. Im folgenden wurde verfahren, wie unter Beispiel 9 bis 16 beschrieben. Weitere Reaktionsparameter sind Tabelle 2 zu entnehmen.

Beispiel 18

Es wurde analog zu Beispiel 17 vorgegangen mit dem Unterschied, daß das nach Beispiel 2 erhaltene Polymerisationsgemisch verwendet wurde (s.a. Tabelle 2).

Tabelle 2

| Bsp. | (Co)polymer-Lsg.[a] gemäß Bsp. | Styrol[b] [Gew. -%] | Acrylnitril[b] [Gew. -%] | t-Dodecylmercaptan[c] [Gew. -%] | Umsatz vor Zugabe der wäßr. Phase [%] |
|---|---|---|---|---|---|
| 9 | 1 | 69 | 23 | 0 | 33,5 |
| 10 | 2 | 92 | 0 | 0,08 | 34,4 |
| 11 | 2[d] | 69 | 23 | 0,08 | 28,3 |
| 12 | 3 | 69 | 23 | 0,08 | 28,6 |
| 13 | 3[e] | 92 | 0 | 0,08 | 38,9 |
| 14 | 4 | 69 | 23 | 0,10 | 29,3 |
| 15 | 5 | 69 | 23 | 0,10 | 27,3 |
| 16 | 6 | 69 | 23 | 0,10 | 32,8 |
| 17 | 3+7[f] | 67,5 | 22,5 | 0,10 | 29,5 |

[a] Der Gesamtkautschukcopolymeranteil beinhaltet ebenfalls in die Blockcopolymere gemäß Beispiel 17 bzw. 18 eingebautes Polyethylhexylacrylat und lag bei 8 Gew. -%
[b] Bezogen auf die Gesamtmenge an (Co)polymer und eingesetzten Monomeren
[c] Bezogen auf die Menge an eingesetzten Monomeren
[d] $M_w$ = 392000 g/mol, $M_w/M_n$ = 1,8
[e] $M_w$ = 313700 g/mol, $M_w/M_n$ = 1,5
[f] 6 Gew.-% an EHA-Copolymer + 4 Gew.-% an Blockcopolymer

Tabelle 2 (fortgesetzt)

| Bsp. | (Co)polymer-Lsg.[a] gemäß Bsp. | Styrol[b] [Gew. -%] | Acrylnitril[b] [Gew. -%] | t-Dodecylmercaptan[c] [Gew. -%] | Umsatz vor Zugabe der wäßr. Phase [%] |
|---|---|---|---|---|---|
| 18 | 2+7[f] | 67,5 | 22,5 | 0,10 | 29,6 |

[a] Der Gesamtkautschukcopolymeranteil beinhaltet ebenfalls in die Blockcopolymere gemäß Beispiel 17 bzw. 18 eingebautes Polyethylhexylacrylat und lag bei 8 Gew. -%

[b] Bezogen auf die Gesamtmenge an (Co)polymer und eingesetzten Monomeren

[c] Bezogen auf die Menge an eingesetzten Monomeren

[f] 6 Gew.-% an EHA-Copolymer + 4 Gew.-% an Blockcopolymer

Die gemäß den Beispielen 9 bis 18 erhaltenen Polymerprodukte wurden mittels Spritzguß bei einer Schmelzetemperatur von 240°C und einer Formtemperatur von 60°C zu Kleinformstäben verarbeitet.

An diesen Formteilen wurden die Lochkerbschlagzähigkeit (ALK) nach DIN 53 753-L-3-0 (Ausgabe 4/81), die Schlagzähigkeit (AN) nach DIN 53 453-n (Ausgabe 5/75) und die Kerbschlagzähigkeit (AK) nach DIN 53 453-K bestimmt. Der Schmelzvolumenindex (MVI) wurde nach DIN 53 735 bei einer Temperatur von 200°C und 21,6 kp ermittelt. Die Versuchsergebnisse sind in Tabelle 3 wiedergegeben.

Tabelle 3

| Bsp. | Formstab aus Formmasse nach Bsp. | MVI 10 min/ 21,6 kp | Schlagzähigkeit bei [$kJm^{-2}$] | | | | | Kerbschlagzähigkeit bei [$kJm^{-2}$] | | | |
|---|---|---|---|---|---|---|---|---|---|---|---|
| | | | 23°C | 0°C | -20°C | -40°C | -50°C | 23°C | 0°C | -20°C | -40°C |
| 19 | 9 | 10,9 | 18,4 | - | 14,6 | - | - | 3,6 | - | 2,3 | - |
| 20 | 10 | 107,4 | 17,9 | 15,8 | 15,4 | - | - | 2,2 | 1,8 | 1,9 | - |
| 21 | 11 | 7,9 | 54,6 | 56,7 | 49,0 | 41,0 | 40,6 | 6,4 | 3,6 | 2,8 | 2,3 |
| 22 | 12 | 3,8 | 26,7 | 27,5 | 25,2 | - | - | 3,6 | 2,7 | 2,4 | - |
| 23 | 13 | 99,9 | 15,3 | 15,0 | 13,0 | - | - | 2,5 | 1,8 | 1,8 | - |
| 24 | 14 | 5,4 | 31,3 | 30,5 | 34,6 | - | - | 4,6 | 3,5 | 2,7 | - |
| 25 | 15 | 9,3 | 28,0 | 23,0 | 22,0 | 22,0 | - | 4,3 | 3,7 | 2,5 | 2,1 |
| 26 | 16 | 6,5 | 54,8 | 52,7 | 47,9 | 43,1 | 39,6 | 5,8 | 4,2 | 2,5 | 2,2 |
| 27 | 17 | 4,4 | 20,2 | 20,8 | 20,6 | - | - | 3,8 | 2,8 | 2,2 | - |
| 28 | 18 | 13,7 | 36,0 | 33,1 | 29,2 | - | - | 3,2 | 3,0 | 2,5 | - |

Tabelle 3 (Fortsetzung)

| Bsp. | Formstab aus Formmasse nach Bsp. | MVI 10 min/ 21,6 kp | Lochkerbschlagzähigkeit bei [kJm-2] 23°C | 0°C | -20°C | -40°C | -50°C |
|---|---|---|---|---|---|---|---|
| 19 | 9 | 10,9 | 7,4 | - | 7,6 | - | - |
| 20 | 10 | 107,4 | 7,6 | 6,9 | 6,3 | - | - |
| 21 | 11 | 7,9 | 13,1 | 11,4 | 11,8 | 9,8 | 10,0 |
| 22 | 12 | 3,8 | 10,6 | 9,7 | 8,9 | - | - |
| 23 | 13 | 99,9 | 6,7 | 5,9 | 5,8 | - | - |
| 24 | 14 | 5,4 | 9,6 | 9,4 | 7,9 | - | - |
| 25 | 15 | 9,3 | 8,7 | 8,3 | 7,8 | 7,1 | - |
| 26 | 16 | 6,5 | 12,9 | 11,9 | 11,6 | 9,4 | 8,8 |
| 27 | 17 | 4,4 | 8,6 | 9,2 | 8,9 | - | - |
| 28 | 18 | 13,7 | 9,5 | 8,1 | 7,5 | - | - |

## Patentansprüche

1. Verfahren zur Herstellung von kautschukmodifizierten Formmassen, dadurch gekennzeichnet, daß man

    $a_1$) ein Gemisch (A), umfassend Acrylat- oder Methacrylatderivate oder Acrylat- und Methacrylatderivate und ein Lösungsmittel, enthaltend olefinisch ungesättigte Verbindungen, die kein Acrylat- oder Methacrylatderivat sind, anionisch zu einem (Co)polymer, enthaltend Acrylatmonomere, deren Homopolymerisate eine Glasübergangstemperatur kleiner als 0°C aufweisen, polymerisiert oder daß man

    $a_2$) Acrylat- oder Methacrylatderivate oder Acrylat- und Methacrylatderivate in Gegenwart eines Lösungsmittels, das olefinisch ungesättigte Verbindungen enthält, sequentiell anionisch zu Blockcopolymeren mit mindestens einem Block aus Monomeren, deren Homopolymere eine Glasübergangstemperatur kleiner 0°C aufweisen, polymerisiert und

    b) das nach $a_1$) oder $a_2$) oder $a_1$) und $a_2$) erhaltene Reaktionsgemisch, ggf. nach Zugabe weiterer ungesättigter Verbindungen, einer radikalisch initiierten Polymerisation unterwirft.

2. Verfahren zur Herstellung von kautschukmodifizierten Formmassen nach Anspruch 1, dadurch gekennzeichnet,

daß man in Verfahrensschritt $a_1$) ein Gemisch (A), umfassend

(i) Verbindungen der allgemeinen Formel (I)

$$CH_2=C(R^a)-COOR^b \quad (I),$$

in der

$R^a$ Wasserstoff oder Methyl,

$R^b$ $C_1$- bis $C_{20}$- n-Alkyl, i-Propyl, i-Butyl, i-Pentyl. oder t-Butyl bedeuten

(ii)Verbindungen der allgemeinen Formel (II)

$$CH_2=C(R^c)-COOCR^dR^eR^f \quad (II)$$

in der

$R^c$ Wasserstoff oder Methyl,

$CR^dR^eR^f$ 2-Methylpropyl, 2-Methylbutyl, 2-Methylhexyl, 2-Methyloctyl, 2-Ethylbutyl, 2-Ethylpentyl, 2-Ethylhexyl, 2-Ethyloctyl, 2-Phenylethyl, 2 -Phenylpropyl, 2-Phenylbutyl, 2-Phenylpentyl, 2 -Phenylhexyl, 2-Phenyloctyl, 3-Methylbutyl, 3-Methylpentyl, 3-Methylhexyl, 3-Methyloctyl, 3-Ethylpentyl, 3-Ethylhexyl oder 3-Ethyloctyl bedeuten,

(iii) Acrylat- oder Methacrylatverbindungen mit einer oder mehreren Doppelbindungen in der Estereinheit,

(iv) Di- oder Poly(meth)acrylsäureester von di- oder polyfunktionellen Alkoholen, oder

(v) Acrylamide oder Methacrylamide, Stickstoff-funktionelle Acrylate und Methacrylate, aromatische und araliphatische Ester der Acryl- oder Methacrylsäure, mit funktionellen Gruppen auf der Basis der Elemente der Gruppen IVA, VA, VIA, VIIA des Periodensystems der Elemente substituierte Acrylate und Methacrylate,

einsetzt, oder in Verfahrensschritt $a_2$) Verbindungen gemäß (i), (ii), (iii), (iv) oder (v) einsetzt.

**3.** Verfahren nach den Ansprüchen 1 oder 2, dadurch gekennzeichnet, daß man in Verfahrensschritten $a_1$) oder $a_2$) als Verbindungen

(i) Ethylacrylat, n-Butylacrylat, n-Hexylacrylat, n-Heptylacrylat, n-Octylacrylat, n-Dodecylacrylat oder Methylmethacrylat,

(ii) 2-Ethylhexylacrylat, 2-Ethylbutylacrylat, oder 3-Methylbutylacrylat,

(iii) Allylacrylat, Allylmethacrylat, Dihydrodicyclopentadienylacrylat, Dihydrodicyclopentadienylmethacrylat, 2-Allyloxyethylacrylat, 2-Allyloxyethylmethacrylat, (3-Vinylbenzyl)acrylat, (3-Vinylbenzyl)methacrylat, (4-Vinylbenzyl)acrylat oder (4-Vinylbenzyl)methacrylat,

(iv) Butandioldiacrylat, Butandioldimethacrylat, Ethandioldiacrylat, Ethandioldimethacrylat, Glyceroltriacrylat oder Glyceroltrimethacrylat,

(v) N,N-Dimethylacrylamid, N,N-Diethylacrylamid, N,N-Dimethylmethacrylamid, N,N-Diethylmethacrylamid, N,N-Di-i-propylacrylamid, N,N-Di-n-butylacrylamid, N-N-Di-i-propylmethacrylamid, N,N-Di-n-butylmethacrylamid, Glycidylacrylat oder Glycidylmethacrylat

verwendet.

4. Verfahren nach den Ansprüchen 1 bis 3, dadurch gekennzeichnet, daß man als olefinisch ungesättigte Verbindungen vinylaromatische Verbindungen verwendet.

5. Verfahren nach den Ansprüchen 1 bis 4, dadurch gekennzeichnet, daß man als Lösungsmittelkomponente inerte, polare oder unpolare aprotische Lösungsmittel verwendet.

6. Verfahren nach den Ansprüchen 1 bis 4, dadurch gekennzeichnet, daß man als Lösungsmittel olefinisch ungesättigte Verbindungen verwendet.

7. Verfahren nach Anspruch 6, dadurch gekennzeichnet, daß man als olefinisch ungesättigte Verbindungen vinylaromatische Verbindungen verwendet.

8. Kautschukmodifizierte Formmassen, erhältlich gemäß einem der Verfahrensansprüche 1 bis 7.

9. Verwendung der kautschukmodifizierten Formmassen gemäß Anspruch 8 zur Herstellung von Fasern, Folien und Formkörpern.

10. Polymerblends, enthaltend kautschukmodifizierte Formmassen gemäß Anspruch 8 und einen oder mehrere Thermoplasten.

## Claims

1. A process for preparing rubber-modified molding compositions, which comprises

$a_1$) anionic polymerization of a mixture (A) comprising acrylate derivatives or methacrylate derivatives or acrylate derivatives and methacrylate derivatives and a solvent, and comprising olefinically unsaturated compounds which are not acrylate derivatives or methacrylate derivatives, to give a (co)polymer comprising acrylate monomers whose homopolymers have a glass transition temperature below 0°C, or

$a_2$) sequential anionic polymerization of acrylate derivatives or methacrylate derivatives or acrylate derivatives and methacrylate derivatives in the presence of a solvent which comprises olefinically unsaturated compounds, to give block copolymers having at least one block made from monomers whose homopolymers have a glass transition temperature below 0°C, and

b) subjecting the reaction mixture obtained in $a_1$) or $a_2$) or $a_1$) and $a_2$) to a free-radical-initiated polymerization, if desired after adding further unsaturated compounds.

2. A process for preparing rubber-modified molding compositions as claimed in claim 1, wherein the mixture (A) used in step $a_1$) comprises

(i) compounds of the formula (I)

$$CH_2=C(R^a)\text{-}COOR^b \qquad (I),$$

where

$R^a$ is hydrogen or methyl, and

$R^b$ is $C_1$-$C_{20}$-n-alkyl, isopropyl, isobutyl, isopentyl or tert-butyl,

(ii) compounds of the formula (II)

$$CH_2=C(R^c)\text{-}COOCR^dR^eR^f \qquad (II)$$

where

$R^c$ is hydrogen or methyl, and

$CR^dR^eR^f$ is 2-methylpropyl, 2-methylbutyl, 2-methylhexyl, 2-methyloctyl, 2-ethylbutyl, 2-ethylpentyl, 2-ethylhexyl, 2-ethyloctyl, 2-phenylethyl, 2-phenylpropyl, 2-phenylbutyl, 2-phenylpentyl, 2-phenylhexyl, 2-phenyloctyl, 3-methylbutyl, 3-methylpentyl, 3-methylhexyl, 3-methyloctyl, 3-ethylpentyl, 3-ethylhexyl or 3-ethyloctyl,

(iii) acrylate compounds or methacrylate compounds having one or more double bonds in the ester moiety,

(iv) di- or poly(meth)acrylates of di- or polyhydric alcohols, or

(v) acrylamides or methacrylamides, nitrogen-functional acrylates or methacrylates, aromatic or araliphatic esters of acrylic or methacrylic acid or methacrylates or acrylates substituted with functional groups based on elements of groups IVA, VA, VIA, VIIA of the Periodic Table of the Elements,

or step $a_2$) uses compounds as in (i), (ii), (iii), (iv) or (v).

**3.** A process as claimed in claims 1 or 2, wherein the compounds used in steps $a_1$) or $a_2$) are

(i) ethyl acrylate, n-butyl acrylate, n-hexyl acrylate, n-heptyl acrylate, n-octyl acrylate, n-dodecyl acrylate or methyl methacrylate,

(ii) 2-ethylhexyl acrylate, 2-ethylbutyl acrylate or 3-methylbutyl acrylate,

(iii) allyl acrylate, allyl methacrylate, dihydrodicyclopentadienyl acrylate, dihydrodicyclopentadienyl methacrylate, 2-allyloxyethyl acrylate, 2-allyloxyethyl methacrylate, 3-vinylbenzyl acrylate, 3-vinylbenzyl methacrylate, 4-vinylbenzyl acrylate or 4-vinylbenzyl methacrylate,

(iv) butanediol diacrylate, butanediol dimethacrylate, ethanediol diacrylate, ethanediol dimethacrylate, glycerol triacrylate or glycerol trimethacrylate,

(v) N,N-dimethylacrylamide, N,N-diethylacrylamide, N,N-dimethylmethacrylamide, N,N-diethylmethacrylamide, N,N-diisopropylacrylamide, N,N-di-n-butylacrylamide, N-N-diisopropylmethacrylamide, N ,N-di-n-butylmethacrylamide, glycidyl acrylate or glycidyl methacrylate.

**4.** A process as claimed in any of claims 1 to 3, wherein the olefinically unsaturated compounds used comprise vinylaromatic compounds.

**5.** A process as claimed in any of claims 1 to 4, wherein inert, polar or nonpolar aprotic solvents are used as solvent component.

**6.** A process as claimed in any of claims 1 to 4, wherein the solvents used comprise olefinically unsaturated compounds.

**7.** A process as claimed in claim 6, wherein the olefinically unsaturated compounds used comprise vinylaromatic compounds.

**8.** A rubber-modified molding composition obtainable as claimed in any one of process claims 1 to 7.

**9.** The use of rubber-modified molding compositions as claimed in claim 8 for producing fibers, films or moldings.

**10.** A polymer blend comprising rubber-modified molding compositions as claimed in claim 8 and comprising one or more thermoplastics.

## Revendications

1. Procédé de préparation de masses de moulage modifiées par du caoutchouc, caractérisé en ce que

   $a_1$) on polymérise un mélange (A), comprenant des dérivés acrylate ou méthacrylate ou des dérivés acrylate et méthacrylate et un solvant, contenant des composés oléfiniquement insaturés, qui ne sont pas un dérivé acrylate ou méthacrylate, par voie anionique en un (co)polymère, contenant des monomères acrylate, dont les homopolymères présentent une température de transition vitreuse inférieure à 0°C, ou
   $a_2$) on polymérise des dérivés acrylate ou méthacrylate ou des dérivés acrylate et méthacrylate en présence d'un solvant qui contient des composés oléfiniquement insaturés, d'une manière séquentielle et anionique en copolymères blocs ayant au moins un bloc de monomères, dont les homopolymères présentent une température de transition vitreuse inférieure à 0°C, et

   b) on soumet le mélange réactionnel obtenu selon $a_1$) ou $a_2$) ou $a_1$) et $a_2$), éventuellement après addition d'autres composés insaturés, à une polymérisation amorcée par voie radicalaire.

2. Procédé de préparation de masses de moulage modifiées par du caoutchouc suivant la revendication 1, caractérisé en ce qu'on met en oeuvre dans une étape $a_1$) un mélange (A), comprenant

   (i) des composés de la formule générale (I):

   $$CH_2=C(R^a) - COOR^b \qquad (I)$$

   dans laquelle

   $R^a$ représente de l'hydrogène ou un groupe méthyle,
   $R^b$ représente un groupe n-alkyle en $C_1$-$C_{20}$, i-propyle, i-butyle, i-pentyle ou t-butyle,

   (ii) des composés de la formule générale (II) :

   $$CH_2=C(R^c) - COOCR^dR^eR^f \qquad (II)$$

   dans laquelle

   $R^c$ représente de l'hydrogène ou un groupe méthyle,
   $CR^dR^eR^f$ représente un groupe 2-méthylpropyle, 2-méthylbutyle, 2-méthylhexyle, 2-méthyloctyle, 2-éthylbutyle, 2-éthylpentyle, 2-éthylhexyle, 2-éthyloctyle, 2-phényléthyle, 2-phénylpropyle, 2-phénylbutyle, 2-phénylpentyle, 2-phénylhexyle, 2-phényloctyle, 3-méthylbutyle, 3-méthylpentyle, 3-méthylhexyle, 3-méthyloctyle, 3-éthylpentyle, 3-éthylhexyle ou 3-éthyloctyle,

   (iii) des composés acrylate ou méthacryle comportant une ou plusieurs doubles liaisons dans l'unité ester,
   (iv) des esters d'acide di- ou poly(méth)acrylique d'alcools difonctionnels ou polyfonctionnels, ou
   (v) des acrylamides ou méthacrylamides, des acrylates et méthacrylates à fonction azote, des esters aromatiques et araliphatiques de l'acide acrylique ou méthacrylique, des acrylates et méthacrylates substitués par des groupes fonctionnels à base des éléments des groupes IVA, VA, VIA, VIIA du Système Périodique des Eléments,
   ou on met en oeuvre dans l'étape $a_2$) des composés conformes à (i), (ii), (iii), (iv) ou (v).

3. Procédé suivant l'une des revendications 1 et 2, caractérisé en ce qu'on utilise dans les étapes $a_1$) ou $a_2$), comme composés,

   (i) de l'acrylate d'éthyle, de l'acrylate de n-butyle, de l'acrylate de n-hexyle, de l'acrylate de n-heptyle, de l'acrylate de n-octyle, de l'acrylate de n-dodécyle ou du méthacrylate de méthyle,
   (ii) de l'acrylate de 2-éthylhexyle, de l'acrylate de 2-éthylbutyle ou de l'acrylate de 3-méthylbutyle,
   (iii) de l'acrylate d'allyle, du méthacrylate d'allyle, de l'acrylate de dihydrodicyclopentadiényle, du méthacrylate

de dihydrodicyclopentadiényle, de l'acrylate de 2-allyloxyéthyle, du méthacrylate de 2-allyloxyéthyle, de l'acrylate de (3-vinylbenzyle), du méthacrylate de (3-vinylbenzyle), de l'acrylate (4-vinylbenzyle) ou du méthacrylate de (4-vinylbenzyle),
(iv) du diacrylate de butanediol, du diméthacrylate de butanediol, du diacrylate d'éthanediol, du diméthacrylate d'éthanediol, du triacrylate de glycérol ou du triméthacrylate de glycérol,
(v) du N,N-diméthylacrylamide, du N,N-diéthylacrylamide, du N,N-diméthylméthacrylamide, du N,N-diéthylméthacrylamide, du N,N-di-i-propylacrylamide, du N,N-di-n-butylacrylamide, du N,N-di-i-propylméthacrylamide, du N,N-di-n-butylméthacrylamide, de l'acrylate de glycidyle ou du méthacrylate de glycidyle.

**4.** Procédé suivant l'une des revendications 1 à 3, caractérisé en ce qu'on utilise, comme composés oléfiniquement insaturés, des composés vinyl-aromatiques.

**5.** Procédé suivant l'une des revendications 1 à 4, caractérisé en ce qu'on utilise, comme composants de solvant, des solvants aprotiques inertes, polaires ou non polaires.

**6.** Procédé suivant l'une des revendications 1 à 4, caractérisé en ce qu'on utilise, comme solvants, des composés oléfiniquement insaturés.

**7.** Procédé suivant la revendication 6, caractérisé en ce que, comme composés oléfiniquement insaturés, on utilise des composés vinyl-aromatiques.

**8.** Masses de moulage modifiées par du caoutchouc, que l'on peut obtenir suivant l'une des revendications 1 à 7.

**9.** Utilisation des masses de moulage modifiées par du caoutchouc suivant la revendication 8, pour la préparation de fibres, de feuilles et de corps façonnés.

**10.** Mélanges polymères, contenant des masses de moulage modifiées par du caoutchouc suivant la revendication 8 et une ou plusieurs substances thermoplastiques.